# EUROPEAN PATENT APPLICATION

(11) **EP 4 064 382 A1**
(43) Date of publication of application: **28.09.2022**
(21) Application number: 22161685.7
(22) Date of filing: 11.03.2022
(51) Int. Cl.: H01M 4/00, H01M 4/04, H01M 4/139, H01M 4/485, H01M 4/62, H01M 10/0525

(54) **LIQUID COMPOSITION, METHOD FOR PRODUCING ELECTRODE, AND METHOD FOR PRODUCING ELECTROCHEMICAL ELEMENT**

(30) Priority: 22.03.2021 JP 2021046737; 13.01.2022 JP 2022003447; 21.02.2022 JP 2022024744
(71) Applicant: Ricoh Company, Ltd., Tokyo 143-8555 (JP)
(72) Inventor: NAKAJIMA, Satoshi, Tokyo, 143-8555 (JP); KURIYAMA, Hiromichi, Tokyo, 143-8555 (JP); KAJITA, Tomomasa, Tokyo, 143-8555 (JP); SAGISAKA, Toshiya, Tokyo, 143-8555 (JP); TANTITARNTONG, Porraphon, Tokyo, 143-8555 (JP)
(74) Representative: Marks & Clerk LLP

(57) **Abstract**

Provided is a liquid composition containing an active substance A, and a dispersion medium B having a relative permittivity of 30 or lower at 25 degrees C.

## Description

### BACKGROUND OF THE INVENTION

### Field of the Invention

The present disclosure relates to a liquid composition, a method for producing an electrode, and a method for producing an electrochemical element.

### Description of the Related Art

Electrochemical elements such as lithium ion secondary batteries are mounted on, for example, portable devices, hybrid cars, and electric vehicles, and are in an increasing demand. There are also increasing needs for thin batteries that can be mounted on various wearable devices and medical patches. Hence, requirements for lithium ion secondary batteries have been diversifying.

A known method for producing an electrode that constitutes an electrochemical element represented by a lithium ion secondary battery forms an electrode mixture layer on an electrode base material by applying an electrode mixture liquid composition on the electrode using, for example, a die coater, a comma coater, and a reverse roll coater. However, in order to apply the liquid composition by the method described above, there is a need for producing a screen for each and every need.

Hence, a proposed method forms an electrode by, for example, discharging a liquid composition containing an active substance onto an electrode base material using a liquid discharging apparatus (for example, see Japanese Unexamined Patent Application Publication No. 2020-113532). Japanese Unexamined Patent Application Publication No. 2020-113532 describes that, for example, N-methyl pyrrolidone (NMP) is mainly used as the dispersion medium of the liquid composition, and that the content of the active substance is from 20% by mass through 40% by mass.

### SUMMARY OF THE INVENTION

According to an embodiment of the present disclosure, a liquid composition contains an active substance, and a dispersion medium having a relative permittivity of 30 or lower at 25 degrees C.

### BRIEF DESCRIPTION OF THE DRAWINGS

FIG. 1 is an exemplary view illustrating an example of an electrode mixture liquid composition according to an embodiment;
FIG. 2 is an exemplary view illustrating an example of an electrode produced by a method for producing an electrode according to an embodiment;
FIG. 3 is a cross-sectional view illustrating an example of a negative electrode according to an embodiment;
FIG. 4 is an exemplary view illustrating an example of a liquid discharging apparatus according to an embodiment;
FIG. 5 is an exemplary view illustrating a modified example of the liquid discharging apparatus of FIG. 4;
FIG. 6 is an exemplary view illustrating another example of a liquid discharging apparatus according to an embodiment;
FIG. 7 is an exemplary view illustrating a modified example of the liquid discharging apparatus of FIG. 6;
FIG. 8 is a cross-sectional view illustrating an example of a positive electrode according to an embodiment;
FIG. 9 is a cross-sectional view illustrating an example of an electrode element used in an electrochemical element according to an embodiment;
FIG. 10 is a cross-sectional view illustrating an example of an electrochemical element according to an embodiment; and
FIG. 11 is a graph plotting cycle characteristics of liquid compositions of Example 5 and Comparative Example 4.

### DESCRIPTION OF THE EMBODIMENTS

An embodiment for carrying out the present disclosure will be described below with reference to the drawings. The same components will be denoted by the same reference numerals, and may not be described redundantly.

### (Liquid composition)

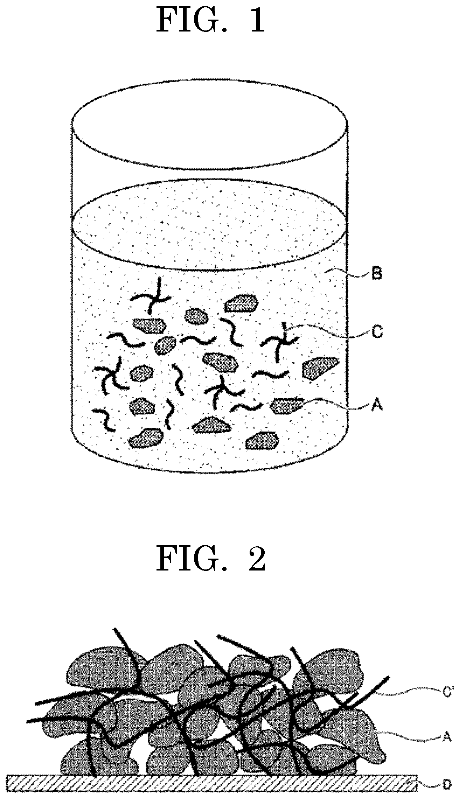

A liquid composition according to an embodiment contains an active material A and a dispersion medium B as illustrated in FIG. 1. The liquid composition may further contain a binder C or binder precursor C', or both, and other components as needed.

The present disclosure has an object to provide a liquid composition that improves productivity of an electrode and an electrochemical element.

The present disclosure can provide a liquid composition that improves productivity of an electrode and an electrochemical element.

The existing technique of Japanese Unexamined Patent Application Publication No. 2020-113532 mainly uses, for example, N-methyl pyrrolidone (NMP) as the dispersion medium of the liquid composition. However, when the content of an active substance contained in the liquid composition using such a dispersion medium is relatively high, the viscosity of the liquid composition is high and it may be difficult to discharge the liquid composition by a liquid discharging apparatus. That is, in order to obtain a liquid composition using such a dispersion medium and dischargeable by a liquid discharging apparatus, it is not an option to increase the content of the active substance contained in the liquid composition. Hence, there is a room for improvement in terms of productivity of an electrode.

In the present specification, when the content of an active substance is relatively high, the content of the active substance in the liquid composition is 40% by mass or greater.

The viscosity of the liquid composition at 25 degrees C is preferably 200 mPa·s or lower, more preferably 100 mPa·s or lower, and yet more preferably 50 mPa·s or lower. When the viscosity of the liquid composition is 200 mPa·s or lower, there is an advantage that discharging failure tends not occur when the liquid composition is discharged by a liquid discharging apparatus. In the present specification, a viscosity of 200 mPa·s or lower may be described as a low viscosity.

In the present specification, the viscosity represents a viscosity at 25 degrees C.

The method for measuring the viscosity of the liquid composition is not particularly limited and may be appropriately selected depending on the intended purpose. For example, the viscosity may be measured according to JIS Z 8803. The instrument used for the measurement is not particularly limited and may be appropriately selected depending on the intended purpose. Examples of the instrument include a TV25-type viscometer (cone-plate viscometer, available from Toki Sangyo Co., Ltd.)._{ο}

### <Active substance>

As the active substance, a positive electrode active substance or a negative electrode active substance can be used. One positive electrode active substance or negative electrode active substance may be used alone or two or more positive electrode active substances or negative electrode active substances may be used in combination.

The positive electrode active substance is not particularly limited so long as the positive electrode active substance can absorb or release an alkali metal ion. An alkali metal-containing transition metal compound can be used as the positive electrode active substance.

Examples of the alkali metal-containing transition metal compound include lithium-containing transition metal compounds such as composite oxides containing one or more elements selected from the group consisting of cobalt, manganese, nickel, chromium, iron, and vanadium, and lithium.

Examples of the lithium-containing transition metal compounds include lithium cobaltate, lithium nickelate, and lithium manganate.

As the alkali metal-containing transition metal compound, polyanionic compounds containing an XO₄ tetrahedron (X represents, for example, P, S, As, Mo, W, and Si) in the crystal structure thereof can also be used. Among such compounds, lithium-containing transition metal phosphoric acid compounds such as lithium iron phosphate and lithium vanadium phosphate are preferable in terms of a cycle characteristic, and lithium vanadium phosphate is particularly preferable in terms of coefficient of lithium diffusion and an output characteristic.

In terms of electron conductivity, the polyanionic compound is preferably a composite compound coated with a conductive assistant such as a carbon material.

The negative electrode active substance is not particularly limited so long as the negative electrode active substance can absorb or release an alkali metal ion. A carbon material containing graphite having a graphite-type crystal structure can be used as the negative electrode active substance.

Examples of the carbon material include natural graphite, artificial graphite, hardly graphitizable carbon (hard carbon), and easily graphitizable carbon (soft carbon).

Examples of the negative electrode active substance other than the carbon material include lithium titanate and titanium oxide.

When using an electrochemical element using a nonaqueous electrolyte, it is preferable to use a high-capacity material such as silicon, tin, silicon alloys, tin alloys, silicon oxide, silicon nitride, and tin oxide as the negative electrode active substance in terms of energy density.

The maximum particle diameter of the active substance is not particularly limited and may be appropriately selected depending on the intended purpose so long as the effect of the present disclosure is not spoiled. It is preferable that the maximum particle diameter of the active substance be smaller than the nozzle diameter of an inkjet head, more preferably sufficiently smaller than the nozzle diameter of an inkjet head in order to better improve inkjet dischargeability. Specifically, the ratio of the maximum particle diameter of the active substance contained in the liquid composition to the nozzle diameter of an inkjet head (maximum particle diameter of the active substance contained in the liquid composition/nozzle diameter of an inkjet head) is preferably 0.8 or less, more preferably 0.6 or less, and yet more preferably 0.5 or less. When the maximum particle diameter of the active substance is not beyond this range, the liquid composition has an improved discharging stability. For example, the nozzle diameter of a liquid droplet observation system (EV1000, available from Ricoh Company, Ltd.) is preferably 40 micrometers. In this case, the maximum particle diameter of the active substance contained in the liquid composition is preferably 32 micrometers or less, more preferably 24 micrometers or less, and yet more preferably 20 micrometers or less.

The mode diameter of the active substance is preferably 0.5 micrometers or greater but 10 micrometers or less and more preferably 3 micrometers or greater but 10 micrometers or less. When the mode diameter of the active substance is 0.5 micrometers or greater but 10 micrometers or less, discharging failure tends not occur when the liquid composition is discharged by a liquid discharging method. When the mode diameter of the active substance is 3 micrometers or greater but 10 micrometers or less, an electrode mixture having a better electric characteristic can be obtained. A local maximum diameter of a distribution in a measured particle size distribution of the active substance contained in the liquid composition is calculated as the mode diameter.

The method for measuring the mode diameter of the active substance is not particularly limited and may be appropriately selected depending on the intended purpose. For example, the mode diameter of the active substance can be measured according to ISO 13320:2009. The instrument used for the measurement is not particularly limited and may be appropriately selected depending on the intended purpose. Examples of the instrument include a laser diffractive particle size distribution measuring instrument (MASTER SIZER 3000, available from Malvern Panalytical Ltd.).

The content of the active substance in the liquid composition is not particularly limited, may be appropriately selected depending on the intended purpose, and is preferably 40% by mass or greater, more preferably 41% by mass or greater, yet more preferably 45% by mass or greater, and particularly preferably 50% by mass or greater. When the content of the active substance in the liquid composition is 40% by mass or greater, the amount of the active substance to be applied per application is high, leading to improvement of productivity of an electrode and an electrochemical element. Moreover, because the dispersion medium occupies a relatively low fraction, a short drying time is needed, leading to improvement of productivity of an electrode and an electrochemical element.

The content of the active substance in the liquid composition is preferably 60% by mass or less. When the content of the active substance in the liquid composition is 60% by mass or less, the liquid composition has an improved dischargeability.

### <Dispersion medium>

The relative permittivity of the dispersion medium at 25 degrees C is 30 or lower, preferably 15 or lower, and more preferably 10 or lower. When the relative permittivity of the dispersion medium at 25 degrees C is 30 or lower, a liquid composition having a low viscosity can be produced. When the relative permittivity of the dispersion medium at 25 degrees C is 30 or lower, a liquid composition having a low viscosity can be obtained even when the content of the active substance is relatively high. When the relative permittivity of the dispersion medium at 25 degrees C is 30 or lower, elution of the active substance ions into the dispersion medium is suppressed, and reduction of the capacity of an electrochemical element per unit can be suppressed.

Examples of the dispersion medium having a relative permittivity of 30 or lower at 25 degrees C include pentane (relative permittivity: 1.8), hexane (relative permittivity: 1.9), heptane (relative permittivity: 1.9), xylene (relative permittivity: 2.3), toluene (relative permittivity: 2.4), mesitylene (relative permittivity: 2.4), dibutyl ether (relative permittivity: 3.1), anisole (relative permittivity: 4.3), diethoxyethane (relative permittivity: 5.0), tetrahydrofuran (relative permittivity: 7.6), ethyl lactate (EL, relative permittivity: 13.1), and acetone (relative permittivity: 20.1). For the relative permittivity of pure dispersion media, literature data are known.

The dispersion medium is a compound that is free of a polymerizable group and in which the active substance can be dispersed as the dispersoid. One dispersion medium may be used alone, or a mixture liquid containing two or more dispersion media may be used. When using a mixture liquid, the relative permittivity of the mixture liquid as a whole at 25 degrees C is 30 or lower.

What is meant when it is said that the active substance can be dispersed in the dispersion medium is as follows. When a mixture solution of the active substance and the dispersion medium is left to stand still for 24 hours, subsequently stirred, and subjected to dispersion treatment for 1 minute using an ultrasonic homogenizer (US-300T, available from Nissei Corporation), and the particle size distribution of the resultant is measured with a particle size distribution measuring instrument (MASTER SIZER 2000, available from Malvern Panalytical Ltd.), the resultant of the dispersion treatment using the ultrasonic homogenizer still has almost the same mode diameter as immediately after the mixture solution is produced, i.e., almost the same mode diameter as before the mixture solution is subjected to dispersion treatment using the ultrasonic homogenizer. Almost the same mode diameter means that the mode diameter difference is 10% or lower.

The relative permittivity of the dispersion medium can be measured with a measuring instrument employing a current measuring method using double cylindrical tubes (for example, MODEL 871, available from Sanyo Trading Co., Ltd.). As the measurement conditions, the measurement frequency is 10 kHz, and the measurement temperature is 25 degrees C. When the dispersion medium in the liquid composition is a mixture liquid, it is possible to obtain the mixture liquid by removing materials of the liquid composition other than the mixture liquid. The relative permittivity of the mixture liquid obtained by removing the materials other than the mixture liquid may be measured. Among the materials other than the mixture liquid, compounds dispersed in the dispersion medium, such as the active substance, can be removed by, for example, filtration. For example, compounds dissolved in the dispersion medium, such as a binder, which is a polymeric compound, can be removed by, for example, distillation. Compounds dissolved in the dispersion medium, such as a binder precursor, which is a polymerizable compound, can be distinguished from the dispersion medium free of a polymerizable group because such compounds have a structure containing a polymerizable group, and can be removed by, for example, distillation and fractional distillation.

It is preferable to use a dehydrated dispersion medium as the dispersion medium. The degree of the dehydration is not particularly limited and may be appropriately selected depending on the intended purpose. The water content of the dispersion medium measured by a Karl Fischer water concentration meter is preferably 1,000 ppm or less, more preferably 100 ppm or less, and yet more preferably 10 ppm or less.

### <Binder>

The binder is not particularly limited so long as the binder can bind negative electrode materials with each other, positive electrode materials with each other, a negative electrode material and an electrode base material for a negative electrode with each other, and a positive electrode material and an electrode base material for a positive electrode with each other. However, when using the liquid composition for inkjet discharging, it is preferable that the binder tend not to act to increase the viscosity of the liquid composition in terms of suppressing nozzle clogging of a liquid discharging head.

The content of the binder relative to the active substance is preferably 1% by mass or greater but 15% by mass or less and more preferably 3% by mass or greater but 10% by mass or less. When the content of the binder relative to the active substance is 1% by mass or greater, the binder can firmly bind the active substance with an electrode base material. When the content of the binder relative to the active substance is 15% by mass or less, the viscosity of the liquid composition tends not to increase.

As the binder, a polymeric compound that can dissolve in the dispersion medium can be used.

In the present specification, a binder that dissolves in the dispersion medium represents a binder having compatibility with the dispersion medium. More specifically, when no precipitate or supernatant is observed when the binder is added and dissolved in the dispersion medium by an amount of 3% by mass and subsequently left to stand still for 10 minutes, it is possible to judge that the binder has dissolved in the dispersion medium.

Examples of the polymeric compound that can dissolve in the dispersion medium include polyamide compounds, polyimide compounds, polyamide imide, ethylenepropylene-butadiene rubbers (EPBR), styrene-butadiene rubbers (SBR), nitrile butadiene rubbers (NBR), isoprene rubbers, polyisobutene, polyethylene glycol (PEO), polymethyl methacrylic acid (PMMA), and polyethylene vinyl acetate (PEVA).

As the polymeric compound that can dissolve in the dispersion medium, polymeric particles may be used. The maximum particle diameter of the polymeric particles is preferably smaller than the nozzle diameter of a liquid discharging head. The mode diameter of the polymeric particles is preferably from 0.01 micrometers through 1 micrometer. Examples of the material constituting the polymeric particles include thermoplastic resins such as polyvinylidene fluoride (PVDF), acrylic resins, styrene-butadiene rubbers, polyethylene, polypropylene, polyurethane, nylon, polytetrafluoroethylene, polyphenylene sulfide, polyethylene terephthalate, and polybutylene terephthalate.

When using a polymeric compound that can dissolve in the dispersion medium as the binder, the viscosity of the liquid composition is preferably a viscosity at which the liquid composition can be discharged from a liquid discharging head, i.e., preferably 200 mPa·s or lower, more preferably 100 mPa·s or lower, and yet more preferably 50 mPa·s or lower.

### <Binder precursor>

The liquid composition may contain a binder precursor instead of the binder, or may contain the binder and a binder precursor.

The content of the binder precursor relative to the active substance is preferably 1% by mass or greater but 15% by mass or less, and more preferably 3% by mass or greater but 10% by mass or less. It is preferable that the content of the binder precursor relative to the active substance be 1% by mass or greater, because the active substance can be firmly bound with an electrode base material. When the content of the binder precursor relative to the active substance is 15% by mass or less, the viscosity of the liquid composition tends not to increase.

Examples of the binder precursor include polymerizable compounds such as monomers.

When using a polymerizable compound as the binder precursor, for example, after the liquid composition in which the polymerizable compound is dissolved in a liquid is applied, the resultant is heated, or irradiated with, for example, nonionizing radiation, ionizing radiation, infrared rays, or ultraviolet rays, in order to polymerize the polymerizable compound. In this way, a binder is produced as illustrated in FIG. 2.

The polymerizable compound is not particularly limited so long as the polymerizable compound contains a polymerizable group. A compound that can polymerize at 25 degrees C is preferable.

Examples of such a polymerizable group include a vinyl group, an acrylic group, a methacrylic group, an allyl group, a vinyl ether group, an isocyanate group, and a thioisocyanate group. Among these groups, a vinyl group, an acrylic group, a methacrylic group are preferable in terms of productivity.

The polymerizable compound may be monofunctional or multifunctional. A multifunctional polymerizable compound represents a compound that contains two or more polymerizable groups.

The multifunctional polymerizable compound is not particularly limited so long as the multifunctional polymerizable compound can polymerize through heating, or irradiation with nonionizing radiation, ionizing radiation, or infrared rays. Examples of the multifunctional polymerizable compound include acrylate resins, methacrylate resins, urethane acrylate resins, vinyl ester resins, unsaturated polyesters, epoxy resins, oxetane resins, vinyl ethers, and resins utilizing an ene-thiol reaction. Among these multifunctional polymerizable compounds, acrylate resins, methacrylate resins, urethane acrylate resins, and vinyl ester resins are preferable in terms of productivity.

A multifunctional acrylate resin can be used as a Michael receptor. Therefore, a multifunctional acrylate resin can be allowed to undergo a polyaddition reaction with a Michael donor.

Examples of the multifunctional acrylate resin include: bifunctional acrylates such as low-molecular weight compounds (e.g., dipropylene glycol diacrylate and neopentyl glycol diacrylate) and high-molecular weight compounds (e.g., polyethylene glycol diacrylate, urethane acrylate, and epoxy acrylate); trifunctional acrylates such as trimethylolpropane triacrylate and pentaerythritol triacrylate; and tetrafunctional or higher acrylates such as pentaerythritol tetraacrylate and dipentaerythritol hexaacrylate.

Examples of the Michael donor include multifunctional amines and multifunctional thiols.

Examples of the multifunctional amines include ethylene diamine, 1, 3-diaminopropane, 1,4-diaminobutane, 1,5-diaminopentane, 1,6-diaminohexane, 1,2-phenylene diamine, 1,3-phenylene diamine, and 1,4-phenylene diamine.

Examples of the multifunctional thiols include 1,2-ethane dithiol, 1,3-propane dithiol, 1,4-butane dithiol, 2,3-butane dithiol, 1,5-pentane dithiol, 1,6-hexane dithiol, 1,2-benzene dithiol, 1,3-benzene dithiol, 1,4-benzene dithiol, 1,3,5-benzene trithiol, and 4,4-biphenyl dithiol.

When the liquid composition contains the binder precursor, it is preferable that the liquid composition contain a catalyst for a polyaddition reaction of the binder precursor, and a polymerization initiator.

As the catalyst for the polyaddition reaction, a catalyst commonly used for a Michael addition reaction may be appropriately selected and used. Examples of the catalyst include: diazabicycloundecene (DBU); amine catalysts such as N-methyl dicyclohexyl amine; basic catalysts such as sodium methoxide, sodium ethoxide, potassium t-butoxide, sodium hydroxide, and tetramethyl ammonium hydroxide; elemental sodium; and butyl lithium.

As the polymerization initiator, for example, a photopolymerization initiator and a thermal polymerization initiator may be used.

Examples of the thermal polymerization initiator include azobis isobutyronitrile (AIBN).

As the polymerization initiator, a photoacid generator may be used. In this case, when the liquid composition that has been applied is irradiated with light, the photoacid generator generates an acid and the polymerizable compound polymerizes.

### <Other components>

Examples of the other components include a conductive assistant, a dispersant, and a solid electrolyte.

### -Conductive assistant-

As the conductive assistant, for example, carbon materials such as carbon black, carbon nanofiber, carbon nanotube, graphene, and graphite particles that are produced by, for example, a furnace method, an acetylene method, and a gasification method can be used. As conductive assistants other than carbon materials, for example, particles and fibers of metals such as aluminum can be used. The conductive assistant may be previously prepared as a composite material with the active substance.

The mass ratio of the conductive assistant to the active substance is preferably 10% by mass or less and more preferably 8% y mass or less. When the mass ratio of the conductive assistant to the active substance is 10% by mass or less, the liquid composition has an improved stability. When the mass ratio of the conductive assistant to the active substance is 8% by mass or less, the liquid composition has a better improved stability.

### - Dispersant-

The dispersant is not particularly limited so long as the dispersant can improve dispersibility of the active substance in the liquid component. Examples of the dispersant include: polyethylene oxide-based, polypropylene oxide-based, polycarboxylic acid-based, naphthalenesulfonic acid-formalin condensate-based, polyethylene glycol-based, polycarboxylic acid partial alkyl ester-based, polyether-based, and polyalkylene polyamine-based high-molecular-weight dispersants; alkyl sulfonic acid-based, quaternary ammonium-based higher alcohol alkylene oxide-based, polyvalent alcohol ester-based, and alkyl polyamine-based low-molecular-weight dispersants; and inorganic dispersants such as polyphosphate-based dispersants. One of these dispersants may be used alone or two or more dispersants may be used in combination.

When the liquid composition contains a solid electrolyte, the dispersant is not particularly limited so long as the dispersant dissolves in the dispersion medium, is nonreactive with the solid electrolyte, and can disperse the inorganic solid electrolyte. The dispersant may be appropriately selected from known or commercially available dispersants depending on the intended purpose. One of these dispersants may be used alone or two or more of these dispersants may be used in combination.

In the present specification, a dispersant that dissolves in the dispersion medium represents a dispersant having compatibility with the dispersion medium. More specifically, when no precipitate or supernatant is observed when the dispersant is added and dissolved in the dispersion medium by an amount of 3% by mass and subsequently left to stand still for 10 minutes, it is possible to judge that the dispersant has dissolved in the dispersion medium.

The content of the dispersant in the liquid composition is not particularly limited and may be appropriately selected depending on the intended purpose. When the solid concentration of the dispersant is excessively high, aggregation occurs contrary to the intention. Therefore, the solid concentration of the dispersant is preferably 10% by mass or less and more preferably 3% by mass or less relative to the active substance or the solid electrolyte to be dispersed, or to the total amount of the active substance and the solid electrolyte.

### -Solid electrolyte-

The material constituting the solid electrolyte layer is not particularly limited so long as the material is a solid substance having an electron insulating property and ionic conductivity. Sulfide solid electrolytes and oxide-based solid electrolytes are preferable because of a high ionic conductivity, and sulfide solid electrolytes are more preferable because of a high plasticity that enables formation of a good interface between solid electrolyte particles or between the solid electrolyte and the active substance.

In the present specification, a solid electrolyte layer having an electron insulating property represents a solid electrolyte layer that does not short-circuit across a positive electrode and a negative electrode that are faced with each other via the solid electrolyte layer. A solid electrolyte layer having ionic conductivity represents a solid electrolyte layer that allows only ions to migrate when a potential difference is applied across a positive electrode and a negative electrode that are faced with each other via the solid electrolyte layer.

The sulfide solid electrolytes are roughly classified into, for example, crystalline sulfide solid electrolytes and glassy sulfide solid electrolytes.

Examples of the crystalline sulfide solid electrolytes include Li_{9.54}Si_{1.74}P_{1.44}S_{11.7}Cl_{0.3}, Li_{9.6}P₃S₁₂, Li₉P₃S₉O₃, Li_{9.81}Sn_{0.81}P_{2.19}S₁₂, Li_{9.42}Si_{1.02}P_{2.1}S_{9.96}O_{2.04}, Li₁₀Ge(P₁₋ₓSbₓ)₂S₁₂ (0≤x≤0.15), Li₁₀SnP₂S₁₂, Li_{10.35}[M1₁₋ₓM2ₓ]_{1.35}P_{1.65}S₁₂ (where M1 and M2 are any selected from Si, Ge, Sn, As, and Sb, 0≤x≤0.15), Li₁₁Si₂PS₁₂, Li₁₁AlP₂S₁₂, Li_{3.45}Si_{0.45}P_{0.55}S₄, Li₆PS₅X (X=Cl, Br, or I), Li₅PS₄X₂ (X=Cl, Br, or I), Li_{5.5}PS_{4.5}Cl_{1.5}, Li_{5.35}Ca_{0.1}PS_{4.5}Cl_{1.55}, Li₆₊ₓMₓSb₁₋ₓS₅I (M=Si, Ge, or Sn, 0≤x≤1), L₁₇P₂S₈I, γ-Li₃PS₄, Li₄MS₄ (M=Ge, Sn, or As), Li₄₋ₓSn₁₋ₓSbₓS₄ (0≤x≤0.15), Li₄₋ₓGe₁₋ₓPₓS₄ (0≤x≤0.15), and Li₃₊₅ₓP₁₋ₓS₄ (0≤x≤0.3).

Examples of the glassy sulfide solid electrolyte include L₁₂S-P₂S₅, L₁₂S-P₂S₅-LiI, Li₂S-P₂S₅-P₂O₅, Li₂S-P₂S₅-LiCl, Li₂S-SiS₂, Li₂S-SiS₂-P₂S₅, Li₂S-SiS₂-Al₂S₃, and Li₂S-SiS₂-LixMOy (M=Si, P, or Ge). For example, Li₇P₃S₁₁ glass ceramic, which is a partially crystallized glassy sulfide solid electrolyte, may also be used. Here, the mix proportion between the materials of the glassy sulfide solid electrolytes is no object.

The oxide-based solid electrolytes are roughly classified into crystalline oxide solid electrolytes and glassy oxide solid electrolytes. Examples of the crystalline oxide solid electrolytes include Li₁₊ₓMₓTi₂₋ₓ(PO₄)3 (M=Al, Cr, Ga, Fe, Sc, In, Lu, Y, or La, 0≤x≤0.5), LaₓLi_{y}TiO₃ (0.3≤x≤0.7, 0.3≤y≤0.7), and Li₇₋ₓLa₃Zr₂₋ₓMₓO₁₂ (M=Nb or Ta, 0≤x≤1).

Examples of the glassy oxide solid electrolytes include Li₄SiO₄-Li₂BO₃, Li₃BO₃-Li₂SO₄, Li₂O-B₂O₃-P₂O₅, and Li₂O-SiO₂.

Any other solid electrolytes than those described above may be used without limitations so long as such other solid electrolytes do not depart from the scope of the spirit of the present disclosure. One of these solid electrolytes may be used alone or two or more of these solid electrolytes may be used in combination.

Any electrolyte material suitable for being dissolved or dispersed in a liquid in order to constitute a layer of the solid electrolyte is a precursor material of the solid electrolyte. Examples of the precursor material include Li₂S, P₂S₅, LiCl, and L₁₂S-P₂S₅-based glass and Li₇P₃S₁₁ glass ceramics, which are materials of the solid electrolytes.

As the solid electrolyte, a product prepared by a known method or a commercially available product may be used.

The content of the inorganic solid electrolyte in the liquid composition is not particularly limited, may be appropriately selected depending on the intended purpose, and is preferably 40% by mass or less and more preferably 30% by mass or less relative to the active substance. The lower limit of the content of the inorganic solid electrolyte is not particularly limited, may be appropriately selected depending on the intended purpose, and is preferably 10% by mass or greater. When the content of the inorganic solid electrolyte is 10% by mass or greater, an electrode has an improved ionic conductivity. When the content of the inorganic solid electrolyte is 40% by mass or less, conductivity can be secured and there is also an advantage in terms of specific energy. When the content of the inorganic solid electrolyte is in the preferable range, there is an advantage in terms of a better productivity.

### <Electrode>

An electrode according to an embodiment includes an electrode mixture formed of the liquid composition according to the embodiment, and an electrode base material.

### <Electrode base material>

The material constituting the electrode base material is not particularly limited so long as the material has an electric conductivity and is stable with respect to a potential applied.

When the liquid composition is applied on the electrode base material and subjected to, for example, heating as needed, an electrode including the electrode base material and the electrode mixture is obtained.

### (Method for producing electrode)

A method for producing an electrode according to an embodiment includes a step of applying the liquid composition according to the embodiment on an electrode base material, and further includes other steps as needed.

The method for applying the liquid composition is not particularly limited. Examples of the method include liquid discharging methods such as an inkjet method, a spray coating method, and a dispenser method, a spin coating method, a casting method, a microgravure coating method, a gravure coating method, a bar coating method, a roll coating method, a wire bar coating method, a dip coating method, a slit coating method, a capillary coating method, a nozzle coating method, a gravure printing method, a screen printing method, a flexographic printing method, an offset printing method, and a reverse printing method. Among these methods, an inkjet method is particularly preferable. Using the inkjet method, it is possible to contactlessly produce an electrode in an optional shape. As a result, some effects are obtained, such as a low loss of the active substance due to die cutting during the production process of an electrode.

### (Method for producing electrode by inkjet method)

A method for producing an electrode particularly by an inkjet method will be described below.

### (Storing container)

A storing container of the present disclosure is a storing container storing the liquid composition of the present disclosure described above.

Examples of the container include a glass bottle, a plastic container, a plastic bottle, a stainless steel bottle, an 18-liter drum, and a drum.

An electrode mixture layer producing apparatus of the present disclosure includes the storing container of the present disclosure described above and a discharging unit configured to discharge the liquid composition stored in the storing container by an inkjet method, and further includes other units as needed.

A method for producing an electrode mixture layer of the present disclosure includes a discharging step of discharging the liquid composition of the present disclosure described above by an inkjet method, and further includes other steps as needed.

### <Discharging unit and discharging step>

The discharging unit is a unit configured to discharge the liquid composition stored in the storing container by an inkjet method.

The discharging step is a step of discharging the liquid composition by an inkjet method.

By the discharging, the liquid composition can be applied on a target and a liquid composition layer can be formed.

The target (may be referred to "discharging destination") is not particularly limited and may be appropriately selected depending on the intended purpose so long as the target is a target on which an electrode mixture layer is formed. Examples of the target include an electrode base material (current collector) and an active substance layer.

### <Other units and other steps>

The other units of the electrode mixture layer producing apparatus is not particularly limited and may be appropriately selected depending on the intended purpose so long as the effect of the present disclosure is not spoiled. Examples of the other units include a heating unit.

The other steps of the method for producing an electrode mixture layer is not particularly limited and may be appropriately selected depending on the intended purpose so long as the effect of the present disclosure is not spoiled. Examples of the other steps include a heating step.

### -Heating unit and heating step-

The heating unit is a unit configured to heat the liquid composition discharged by the discharging unit.

The heating step is a step of heating the liquid composition discharged in the discharging step.

By the heating, the liquid composition layer can be dried.

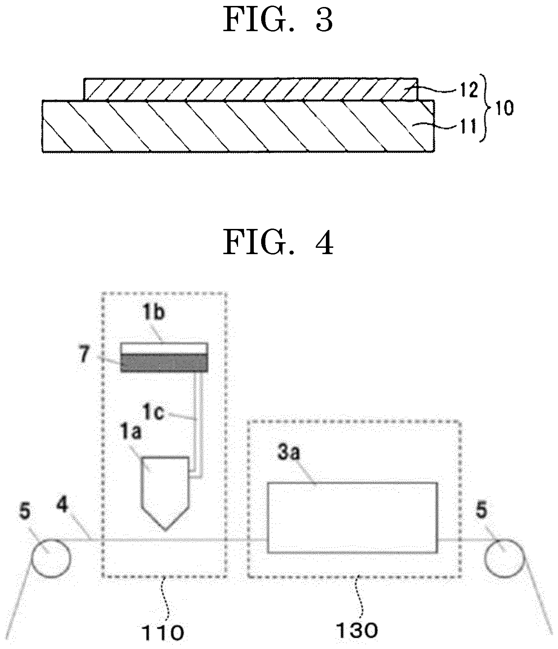

FIG. 4 is an exemplary view illustrating an example of an electrode mixture layer producing apparatus (liquid discharging apparatus) for realizing the method for producing an electrode mixture layer according to an embodiment.

The electrode mixture layer producing apparatus is an apparatus configured to produce an electrode mixture layer using the liquid composition described above. The electrode mixture layer producing apparatus includes a discharging step unit 110 configured to apply a liquid composition on a print base material 4 including a discharging destination, to form a liquid composition layer, and a heating step unit 130 configured to heat the liquid composition layer to obtain an electrode mixture layer. The electrode mixture layer producing apparatus includes a conveying unit 5 configured to convey the print base material 4. The conveying unit 5 is configured to convey the print base material 4 to the discharging step unit 110 and to the heating step unit 130 in this order at a previously set speed.

The method for producing the print base material 4 including a discharging destination such as the active substance layer is not particularly limited, and a known method may be appropriately selected.

The discharging step unit 110 includes an arbitrary printing device 1a suited to the inkjet printing method and serving as applying unit configured to realize an applying step of applying the liquid composition on the print base material 4, a storing container 1b storing the liquid composition, and a supplying tube 1c configured to supply the liquid composition stored in the storing container 1b to the printing device 1a.

The storing container 1b stores a liquid composition 7. The discharging step unit 110 causes the printing device 1a to discharge the liquid composition 7 to apply the liquid composition 7 on the print base material 4 and form a liquid composition layer in a thin film shape. The storing container 1b may be integrated with the electrode mixture layer producing apparatus, but may be detachable from the electrode mixture layer producing apparatus. Moreover, the storing container may be a container used for addition into a storing container integrated with the electrode mixture layer producing apparatus or a storing container detachable from the electrode mixture layer producing apparatus.

The storing container 1b and the supplying tube 1c may be arbitrarily selected so long as the liquid composition 7 can be stored and supplied stably.

The heating step unit 130 includes a heating device 3a as illustrated in FIG. 4, and includes a solvent removing step of causing the heating device 3a to heat, dry, and remove a solvent remaining in the liquid composition layer. As a result, an electrode mixture layer can be formed. The heating step unit 130 may perform the solvent removing step at reduced pressure.

The heating device 3a is not particularly limited and may be appropriately selected depending on the intended purpose. Examples of the heating device 3a include substrate heating, an IR heater, and a hot air heater. These heating devices may be combined.

The heating temperature and time may be appropriately selected depending on the boiling point of the solvent contained in the liquid composition 7 and the thickness of the film to be formed.

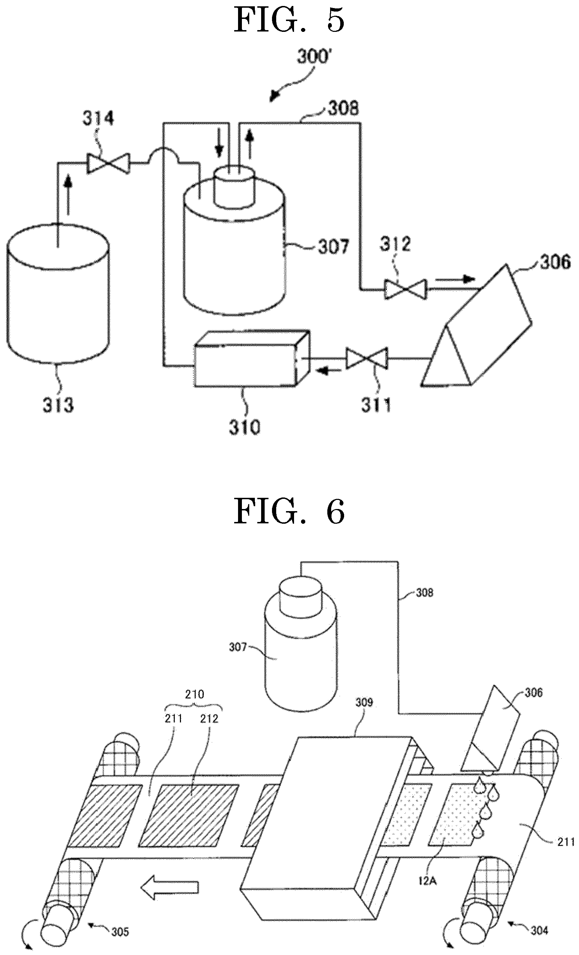

FIG. 5 is an exemplary view illustrating another example of the electrode mixture layer producing apparatus (liquid discharging apparatus) for realizing the method for producing an electrode mixture layer according to the embodiment.

A liquid discharging apparatus 300' can circulate a liquid composition through a liquid discharging head 306, a tank 307, and a tube 308 by controlling a pump 310 and valves 311 and 312.

The liquid discharging apparatus 300' includes an external tank 313. When the amount of the liquid composition in the tank 307 has reduced, the liquid discharging apparatus 300' can supply the liquid composition from the external tank 313 to the tank 307 by controlling the pump 310 and valves 311, 312, and 314.

Using the electrode mixture layer producing apparatus, it is possible to discharge the liquid composition to an intended position of the discharging destination.

The electrode mixture layer can be suitably used as a part of the components of an electrochemical element. Other components of the electrochemical element than the electrode mixture layer are not particularly limited, and known components may be appropriately selected. Examples of the other components include a positive electrode, a negative electrode, and a separator.

FIG. 6 illustrates another example of the method for producing an electrode according to the embodiment.

A method for producing an electrode 210 includes a step of discharging a liquid composition 12A onto an electrode base material 211 sequentially, using the liquid discharging apparatus 300'.

First, an elongate electrode base material 211 is prepared. The electrode base material 211 is wound around a tubular core, and is set on a sending roller 304 and a takeup roller 305 in a manner that a surface on which electrode mixture layers 212 are to be formed faces upward in FIG. 6. The sending roller 304 and the takeup roller 305 rotate counterclockwise, and the electrode base material 211 is conveyed from the right-hand side to the left-hand side in FIG. 6. The liquid discharging head 306 provided above the electrode base material 211, which is between the sending roller 304 and the takeup roller 305, discharges liquid droplets of the liquid composition 12A in the same manner as in FIG. 4 onto the electrode base material 211 conveyed sequentially.

A plurality of liquid discharging heads 306 may be provided in a direction approximately parallel or a direction approximately perpendicular to the conveying direction of the electrode base material 211. Next, the sending roller 304 and the takeup roller 305 convey the electrode base material 211, onto which the liquid droplets of the liquid composition 12A have been discharged, to a heating mechanism 309. As a result, an electrode mixture layer 212 is formed, and an electrode 210 is obtained. Subsequently, the electrode 210 is cut into a desired size by, for example, punching.

The heating mechanism 309 may be provided either above or below the electrode base material 211, or a plurality of heating mechanisms may be provided.

The heating mechanism 309 is not particularly limited so long as the heating mechanism 309 does not directly contact the liquid composition 12A. Examples of the heating mechanism 309 include a resistive heater, an infrared heater, and a fan heater. A plurality of heating mechanisms 309 may be provided. Moreover, an ultraviolet curing device for polymerization may be provided.

It is preferable to heat the liquid composition 12A discharged onto the electrode base material 211. When heating the liquid composition 12A, the liquid composition 12A may be heated by a stage, or by any other heating mechanism than a stage. The heating mechanism may be provided either above or below the electrode base material 211, or a plurality of heating mechanisms may be provided.

The heating temperature is not particularly limited. By heating, the liquid composition 12A dries and forms a negative electrode mixture layer. However, when the liquid composition 12A contains a binder precursor, the heating temperature is preferably a temperature at which the binder precursor polymerizes, and is preferably in a range from 70 degrees C through 150 degrees C in terms of energy used. When heating the liquid composition 12A discharged onto the electrode base material 211, it is possible to irradiate the liquid composition 12A with ultraviolet rays.

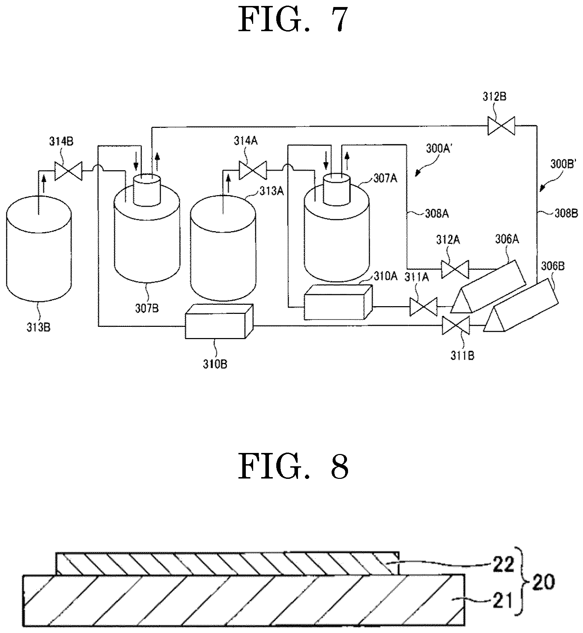

As illustrated in FIG. 7, a tank 307A may be supplied with the liquid composition from a tank 313A coupled to the tank 307A, and the liquid discharging head 306 may include a plurality of liquid discharging heads 306A and 306B.

As a method for producing the electrochemical element, a known method may be appropriately selected on the condition that an electrode mixture layer is the electrode mixture layer of the present disclosure.

### <Negative electrode>

FIG. 3 illustrates an example of a negative electrode according to an embodiment.

A negative electrode 10 includes a negative electrode base material 11, and a negative electrode mixture layer 12 formed on one surface of the negative electrode base material 11. The shape of the negative electrode 10 is not particularly limited. Examples of the shape of the negative electrode 10 include a flat plate shape. Examples of the material constituting the negative electrode base material 11 include stainless steel, nickel, aluminum, and copper.

The negative electrode mixture layer 12 may be formed on both surfaces of the negative electrode base material 11.

### <Method for producing negative electrode>

The negative electrode can be produced using the electrode producing apparatus described above.

### <Positive electrode>

FIG. 8 illustrates an example of a positive electrode according to an embodiment. The positive electrode 20 includes a positive electrode base material 21, and a positive electrode mixture layer 22 formed on one surface of the positive electrode base material 21. The shape of the positive electrode 20 is not particularly limited. Examples of the shape of the positive electrode 20 include a flat plate shape. Examples of the material constituting the positive electrode base material 21 include stainless steel, aluminum, titanium, and tantalum. The positive electrode mixture layer 22 may be formed on both surfaces of the positive electrode base material 21.

### <Method for producing positive electrode>

The positive electrode can be produced using the electrode producing apparatus described above.

### <Electrochemical element>

An electrochemical element according to an embodiment includes the electrode according to the embodiment, an electrolyte, a separator, and an outer package. When using a solid electrolyte or a gel electrolyte, a separator is not needed.

### <Electrolyte>

As the electrolyte, an electrolyte aqueous solution or a nonaqueous electrolyte may be used.

### -Electrolyte aqueous solution-

An electrolyte aqueous solution is an aqueous solution obtained by dissolving an electrolyte salt in water. Examples of the electrolyte salt include sodium hydroxide, potassium hydroxide, sodium chloride, potassium chloride, ammonium chloride, zinc chloride, zinc acetate, zinc bromide, zinc iodide, zinc tartrate, and zinc perchloride.

### - Nonaqueous electrolyte-

As the nonaqueous electrolyte, a nonaqueous electrolytic solution or a solid electrolyte, and a gel electrolyte may be used.

### --Nonaqueous electrolytic solution--

The nonaqueous electrolytic solution is an electrolytic solution obtained by dissolving an electrolyte salt in a nonaqueous solvent.

### --Nonaqueous solvent--

The nonaqueous solvent is not particularly limited. For example, an aprotonic organic solvent is preferable. As the aprotonic organic solvent, for example, a carbonate-based organic solvent such as chain carbonate and cyclic carbonate can be used. Of these, chain carbonate is preferable because chain carbonate has a high solvent power for the electrolyte salt. The viscosity of the aprotonic organic solvent is preferably low.

Examples of chain carbonate include dimethyl carbonate (DMC), diethyl carbonate (DEC), and methylethyl carbonate (EMC).

The content of the chain carbonate in the nonaqueous solvent is preferably 50% by mass or greater. When the content of the chain carbonate in the nonaqueous solvent is 50% by mass or greater, and even if any other nonaqueous solvent contained other than the chain carbonate is a cyclic substance having a high relative permittivity (e.g., cyclic carbonate and cyclic ester), the content of the cyclic substance is low. Hence, even when a nonaqueous electrolytic solution having a high concentration higher than or equal to 2 M is produced, the nonaqueous electrolytic solution has a low viscosity, and can permeate electrodes well and diffuse ions well.

Examples of the cyclic carbonate include propylene carbonate (PC), ethylene carbonate (EC), butylene carbonate (BC), and vinylene carbonate (VC).

Examples of nonaqueous solvents other than carbonate-based organic solvents include ester-based organic solvents such as cyclic ester and chain ester, and ether-based organic solvents such as cyclic ether and chain ether.

Examples of the cyclic ester include γ-butyrolactone (yBL), 2-methyl-γ-butyrolactone, acetyl-γ-butyrolactone, and γ-valerolactone.

Examples of the chain ester include propionic acid alkyl esters, malonic acid dialkyl esters, acetic acid alkyl esters (e.g., methyl acetate (MA) and ethyl acetate), and formic acid alkyl esters (e.g., methyl formate (MF) and ethyl formate).

Examples of the cyclic ether include tetrahydrofuran, alkyl tetrahydrofuran, alkoxy tetrahydrofuran, dialkoxy tetrahydrofuran, 1,3-dioxolane, alkyl-1,3-dioxolane, and 1,4-dioxolane.

Examples of the chain ether include 1,2-dimethoxyethane (DME), diethyl ether, ethylene glycol dialkyl ether, diethylene glycol dialkyl ether, triethylene glycol dialkyl ether, and tetraethylene glycol dialkyl ether.

### -Electrolyte salt-

The electrolyte salt is not particularly limited so long as the electrolyte salt has a high ionic conductivity and can be dissolved in the nonaqueous solvent.

It is preferable that the electrolyte salt contain a halogen atom. Examples of a cation constituting the electrolyte salt include a lithium ion. Examples of an anion constituting the electrolyte salt include BF₄⁻, PF₆⁻, AsF₆⁻, CF₃SO₃⁻ , (CF₃SO₂)₂N⁻, and (C₂F₅SO₂)₂N⁻.

A lithium salt is not particularly limited and may be appropriately selected depending on the intended purpose. Examples of the lithium salt include lithium hexafluorophosphate (LiPF₆), lithium borofluoride (LiBF₄), lithium arsenic hexafluoride (LiAsF₆), lithium trifluorometa sulfonate (LiCF₃SO₃), lithium bis(trifluoromethyl sulfonyl)imide (LiN(CF₃SO₂)₂), and lithium bis(pentafluoroethyl sulfonyl)imide (LiN(C₂F₅SO₂)₂). Among these lithium salts, LiPF₆ is preferable in terms of ionic conductivity and LiBF₄ is preferable in terms of stability.

One of these electrolyte salts may be used alone or two or more of these electrolyte salts may be used in combination.

The concentration of the electrolyte salt in the nonaqueous electrolytic solution may be appropriately selected depending on the intended purpose, and is preferably from 1 mol/L through 2 mol/L when a nonaqueous electrochemical element is a swing type and preferably from 2 mol/L through 4 mol/L when a nonaqueous electrochemical element is a reserve type.

### <Solid electrolyte>

As the solid electrolyte, the materials described above can be used.

### <Gel electrolyte>

The gel electrolyte is not particularly limited and may be appropriately selected depending on the intended purpose so long as the gel electrolyte has ionic conductivity. Examples of a polymer that constitutes the network structure of the gel electrolyte include polyethylene oxide, polypropylene oxide, polyacrylonitrile, polymethyl methacrylate, polyvinyl chloride, copolymers of vinylidene fluoride and propylene hexafluoride, and polyethylene carbonate.

Examples of solvent molecules to be supported include an ionic liquid. Examples of the ionic liquid include 1-methyl-1-propyl pyrrolidinium bis(fluorosulfonylimide), 1-butyl-1-methyl pyrrolidinium bis(fluorosulfonylimide), 1-methyl-1-propyl piperidinium bis(fluorosulfonylimide), 1-ethyl-3-methyl imidazolium bis(fluorosulfonylimide), 1-methyl-3-propyl imidazolium bis(fluorosulfonylimide), and N,N-diethyl-N-methyl-N-(2-methoxyethyl) ammonium bis(fluorosulfonyl)imide.

A mixture of a liquid of, for example, tetraglyme, propylene carbonate, fluoroethylene carbonate, ethylene carbonate, or diethyl carbonate with a lithium salt may also be used. The lithium salt is not particularly limited and may be appropriately selected depending on the intended purpose. Examples of the lithium salt include lithium hexafluorophosphate (LiPF₆), lithium borofluoride (LiBF₄), lithium arsenic hexafluoride (LiAsF₆), lithium trifluoromethanesulfonate (LiCF₃SO₃), lithium bis(trifluoromethylsulfonyl)imide (LiN(CF₃SO₂)₂), and lithium bis(pentafluoroethylsulfonyl)imide (LiN(C₂F₅SO₂)₂).

Any other substances than those described above can be used safely so long as such other substances do not depart from the scope of the spirit of the present disclosure. One of the gel electrolytes may be used alone or two or more of the gel electrolytes may be used in combination.

As the electrolyte material to be dissolved or dispersed in a liquid in order to constitute the gel electrolyte, a solution in which any polymer compound described above, and an ionic liquid or a lithium salt are dissolved may also be used. Moreover, a solution in which, for example, polyethylene oxide or polypropylene oxide, which is a material serving as the precursor of a gel electrolyte and containing acrylate groups at, for example, both ends, and an ionic liquid or a lithium salt are dissolved may be used in combination.

### <Separator>

As needed, a separator 30 is provided between a negative electrode 15 and a positive electrode 25 in order to prevent short-circuiting across the negative electrode 15 and the positive electrode 25.

Examples of the separator 30 include paper such as craft paper, vinylon mixed paper, and synthetic pulp mixed paper, cellophane, polyethylene graft films, polyolefin non-woven fabric such as polypropylene melt blown non-woven fabric, polyamide non-woven fabric, glass fiber non-woven fabric, and micropore films.

The size of the separator 30 is not particularly limited so long as the separator 30 can be used in an electrochemical element.

The separator 30 may have a single-layer structure or a laminated-layer structure.

When an electrolyte aqueous solution or a nonaqueous electrolytic solution is used as the electrolyte, the separator 30 is needed. However, when a solid electrolyte or a gel electrolyte is used, the separator 30 is replaced with the solid electrolyte or the gel electrolyte.

### <Outer package>

The outer package is not particularly limited so long as the outer package can seal the electrode, the electrolyte, and the separator, or the solid electrolyte or the gel electrolyte.

### <Method for producing electrochemical element>

A method for producing an electrochemical element according to an embodiment includes a step of producing an electrode using the method for producing an electrode described above, a step of producing an electrode element using the electrode, and a step of producing an electrochemical element using the electrode element.

### <Electrode element>

The electrode element includes an electrode and a separator.

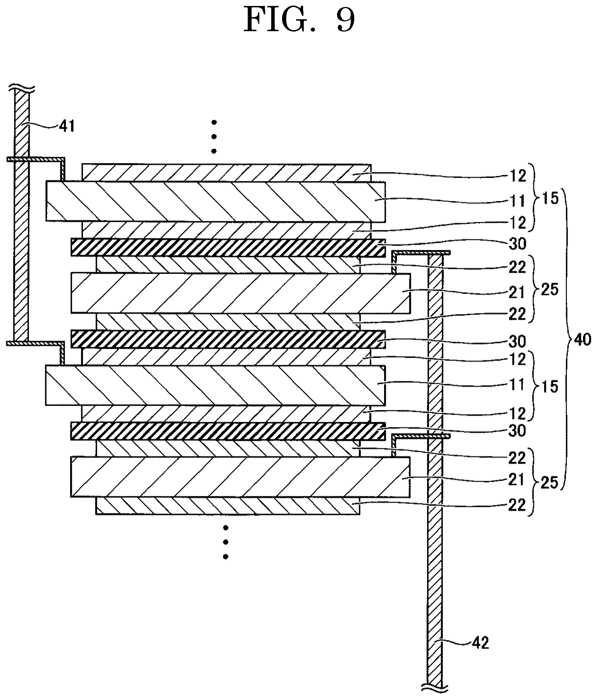

FIG. 9 illustrates an example of an electrode element used in an electrochemical element according to an embodiment.

The electrode element 40 includes negative electrodes 15 and positive electrodes 25 that are laminated via separators 30. The positive electrodes 25 are laminated on both sides of a negative electrode 15. A lead wire 41 is coupled to negative electrode base materials 11. A lead wire 42 is coupled to positive electrode base materials 21.

When the electrode element is used in a solid electrochemical element, the separators 30 may be replaced with a solid electrolyte or a gel electrolyte.

The negative electrode 15 is the same as the negative electrode 10 except that negative electrode mixture layers 12 are formed on both surfaces of the negative electrode base material 11.

The positive electrode 25 is the same as the positive electrode 20 except that positive electrode mixture layers 22 are formed on both surfaces of the positive electrode base material 21.

The number of negative electrodes 15 and positive electrodes 25 laminated in the electrode element 40 is not particularly limited. The number of negative electrodes 15 and the number of positive electrodes 25 in the electrode element 40 may be the same or different.

### <Electrochemical element>

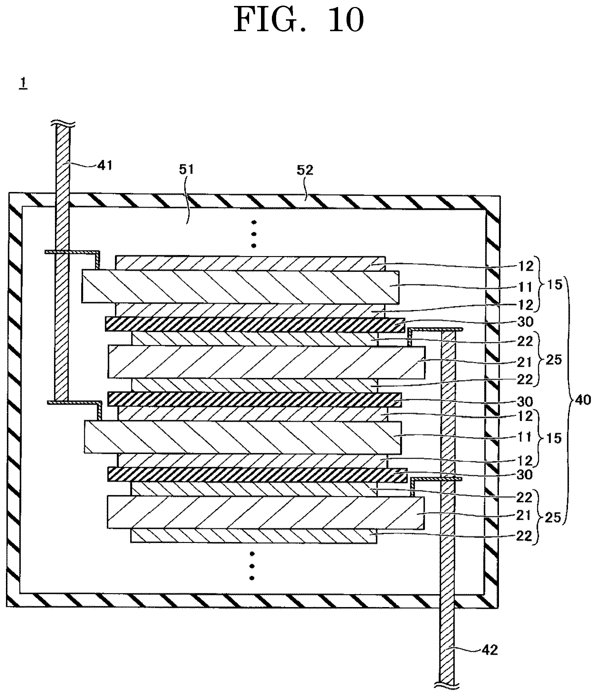

FIG. 10 illustrates an example of an electrochemical element according to an embodiment.

When an electrochemical element 1 is a liquid-type electrochemical element, the electrochemical element 1 includes an electrolyte layer 51, which is formed by injecting an electrolyte aqueous solution or a nonaqueous electrolyte into the electrolyte element 40 and sealed within an outer package 52. In the electrochemical element 1, lead wires 41 and 42 are let out from the outer package 52.

When the electrochemical element 1 is a solid electrochemical element, the separators 30 may be replaced with a solid electrolyte or a gel electrolyte.

The shape of the electrochemical element 1 is not particularly limited. Examples of the shape of the electrochemical element 1 include a laminate type, a cylinder type in which sheet electrodes and separators are formed in spiral shapes, a cylinder type having an inside-out structure in which pellet electrodes and separators are combined, and a coin type in which pellet electrodes and separators are laminated.

### <Applications of electrochemical element>

The applications of the electrochemical element are not particularly limited. Examples of the applications of the electrochemical element include: vehicles; and electrical appliances such as smart phones, laptop personal computers, stylus personal computers, mobile computers, electronic book players, portable phones, portable facsimile machines, portable copiers, portable printers, stereophones, video movies, liquid crystal television sets, handheld vacuum cleaners, portable CDs, mini disks, transceivers, electronic organizers, calculators, memory cards, portable tape recorders, radios, backup power supplies, motors, illumination devices, toys, game consoles, clocks, strobes, and cameras. Among these applications, vehicles and electrical appliances are particularly preferable.

Examples of the vehicles include standard-sized motor vehicles, large-sized special motor vehicles, small-sized special motor vehicles, trucks, large-sized motorbikes, and standard-sized motorbikes.

### EXAMPLES

The present disclosure will be described below by way of Examples. The present disclosure should not be construed as being limited to these Examples.

In Examples and Comparative Examples below, the mode diameter of the active substance, the viscosity of the liquid composition, the capacity, per unit area, of an electrode free of a solid electrolyte, and the capacity, per unit area, of an electrode including a solid electrolyte, were measured in the manners described below.

### [Mode diameter of active substance]

The particle size distribution of an active substance contained in a liquid composition obtained was measured using a laser diffractive particle size distribution measuring instrument (MASTER SIZER 3000, obtained from Malvern Panalytical Ltd.) at room temperature (25 degrees C). A local maximum diameter of a distribution in the measured particle size distribution of the active substance contained in the liquid composition was calculated as the mode diameter.

### [Viscosity of liquid composition]

The viscosity of a liquid composition obtained was measured with a TV25 viscometer (cone plate viscometer, obtained from Toki Sangyo Co., Ltd.) at a rotation number of 100 rpm at room temperature (25 degrees C).

### [Capacity, per unit area of electrode free of solid electrolyte]

The capacity, per unit area, of an electrode was measured using a charge/discharge meter TOSCAT3001 (obtained from Toyosystem Corporation). After an electrode produced was punched into a circular shape having a diameter of 16 mm, the positive electrode, a glass separator having a thickness of 100 micrometers (obtained from Advantec Co., Ltd.), a liquid composition, and a lithium counter electrode having a thickness of 200 micrometers (obtained from Honjo Metals Co., Ltd.) were placed in a coin-shaped can, to obtain an electrochemical element.

As initial charging and discharging, the electrochemical element was charged up to 4.2 V at a constant current value, which was 20% of a capacity, per unit area, of the positive electrode active substance calculated from the theoretical capacity of the positive electrode active substance, and subsequently discharged to 3.0 V at a constant current value at room temperature (25 degrees C). The same charging and discharging was performed twice. The capacity reached by the second discharging was measured as the initial capacity of the positive electrode per unit area.

A negative electrode was produced in the same manner. Charging and discharging was performed in the range of from 1.0 V through 2.0 V for lithium titanate and in the range of from 0.05 V through 2.0 V for any other active substance, and the capacity of the negative electrode per unit area was calculated.

### [Capacity, per unit area, of electrode including solid electrolyte]

As a solid electrolyte 1, an argyrodite sulfide solid electrolyte Li₆PS₅Cl (LPSC) was synthesized according to Document 1.

### [Document 1]

Nataly Carolina Rosero-Navarro et al., Journal of Power Sources 396 (2018) 33.

Next, the capacity of a positive electrode or a negative electrode including the solid electrolyte 1 was evaluated in the manner described below.

Under an argon atmosphere, the positive electrode or the negative electrode was punched into a circular shape having a diameter of 10 mm.

The solid electrolyte 1 (80 mg) was put into a polyethylene terephthalate (PET) tube of a bipolar cell (obtained from Hohsen Corp.), and molded under a press pin using a uniaxial press machine (obtained from Riken Seiki, P-6) at an indicated pressure of 10 MPa for 1 minute.

Next, the positive electrode or the negative electrode punched into a diameter of 10 mm was placed in a manner that the active substance side would contact the surface of the solid electrode in the PET tube, and molded under a press pin using a uniaxial press machine (obtained for Riken Seiki, P-6) at an indicated pressure of 30 MPa for 1 minute.

A product (obtained from Honjo Metals Co., Ltd.) in which lithium having a thickness of 50 micrometers was pasted on a SUS foil having a thickness of 10 micrometers, and then indium having a thickness of 50 micrometers (obtained from Nilaco Corporation) were overlaid on the side opposite to the pressed positive electrode mixture layer. The resultant was molded using a uniaxial press machine (obtained from Riken Seiki, P-6) at an indicated pressure of 12 MPa for 3 seconds. The PET tube under the press pin was put into the bipolar cell, and closely sealed using a digital torque ratchet (KTC tool) until an indicated pressure of 25 N-m.

As initial charging and discharging, the electrochemical element obtained was charged up to 3.6 V at a constant current value, which was 20% of a capacity, per unit area, of the positive electrode active substance calculated from the theoretical capacity of the positive electrode active substance, and subsequently discharged to 2.4 V at a constant current value at room temperature (25 degrees C). The same charging and discharging was performed twice. The capacity reached by the second discharging was measured as the initial capacity of the positive electrode per unit area.

Likewise, for a negative electrode, charging and discharging was performed in the range of from -0.55 V through 1.4 V at a current value, which was 20% of a capacity, per unit area, of the negative electrode active substance calculated from the theoretical capacity of the negative electrode active substance, and the capacity of the negative electrode per unit area was calculated.

### (Example 1)

In the following description, any values % by mass indicated for the substances contained in the liquid composition represent values % by mass relative to the liquid composition. The values % by mass indicated for the dispersion medium are values obtained by subtracting the values % by mass of each component from 100% by mass.

In ethyl lactate to which a dispersant (obtained from NOF Corporation, SC-0708A) (0.5% by mass) was added, a nickel-based positive electrode active substance (NCA, 50% by mass) (obtained from JFE Mineral Company, Ltd.) was ground and pulverized using a bead mill (obtained from Thinky Corporation, NP-100), to disperse the nickel-based positive electrode active substance in ethyl lactate (relative permittivity: 13.1). Carbon black (1.5% by mass) (obtained from Denka Company Limited) and a polyamide imide compound (PAI) (1.5% by mass) represented by General formula 1 below were further mixed in the resultant, to obtain a liquid composition A. The liquid composition A had a mode diameter of 9.72 micrometers, and a viscosity of 10.7 mPa·s at 25 degrees C. 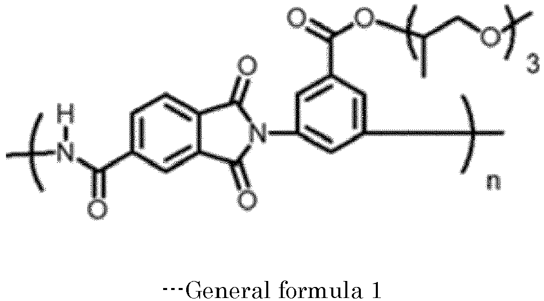 n represents an integer of 1 or greater.

Using a liquid discharging apparatus (EV2500, obtained from Ricoh Company, Ltd.), the liquid composition A was discharged onto an aluminum foil (obtained from UACJ Foil Corporation, A1085) fixed on a hot plate. The hot plate was heated to 120 degrees C, to dry the liquid composition A and obtain a positive electrode A. The liquid composition A was discharged stably, and no discharging failure occurred. The capacity of the positive electrode A per unit area was 0.88 mAh/cm².

### (Example 2)

In ethyl lactate to which a dispersant (obtained from NOF Corporation, SC-0708A) (0.6% by mass) was added, a nickel-based positive electrode active substance (NCA, 60% by mass) (obtained from JFE Mineral Company, Ltd.) was ground and pulverized using a bead mill (obtained from Thinky Corporation, NP-100), to disperse the nickel-based positive electrode active substance in ethyl lactate (relative permittivity: 13.1). Carbon black (1.8% by mass) and the polyamide imide compound (PAI) (1.8% by mass) represented by General formula 1 above were further mixed in the resultant, to obtain a liquid composition B. The liquid composition B had a mode diameter of 9.89 micrometers, and a viscosity of 20.1 mPa·s at 25 degrees C.

Using a liquid discharging apparatus (EV2500, obtained from Ricoh Company, Ltd.), the liquid composition B was discharged onto an aluminum foil fixed on a hot plate. The hot plate was heated to 120 degrees C, to dry the liquid composition B and obtain a positive electrode B. The liquid composition B was discharged stably, and no discharging failure occurred. The capacity of the positive electrode B per unit area was 0.87 mAh/cm².

### (Example 3)

In anisole to which a dispersant (obtained from NOF Corporation, SC-0708A) (0.5% by mass) was added, a nickel-based positive electrode active substance (NCA, 50% by mass) (obtained from JFE Mineral Company, Ltd.) was ground and pulverized using a bead mill (obtained from Thinky Corporation, NP-100), to disperse the nickel-based positive electrode active substance in anisole (relative permittivity: 4.3). Carbon black (1.5% by mass) and polymethyl methacrylate (PMMA, 1.5% by mass) (obtained from Sigma-Aldrich Co. LLC) were further mixed in the resultant, to obtain a liquid composition C. The liquid composition C had a mode diameter of 9.66 micrometers, and a viscosity of 11.5 mPa·s at 25 degrees C.

Using a liquid discharging apparatus (EV2500, obtained from Ricoh Company, Ltd.), the liquid composition C was discharged onto an aluminum foil fixed on a hot plate. The hot plate was heated to 120 degrees C, to dry the liquid composition C and obtain a positive electrode C. The liquid composition C was discharged stably, and no discharging failure occurred. The capacity of the positive electrode C per unit area was 0.89 mAh/cm².

### (Example 4)

In anisole (relative permittivity: 4.3) to which a dispersant (obtained from NOF Corporation, SC-0708A) (0.6% by mass) was added, a nickel-based positive electrode active substance (NCA, 60% by mass) (obtained from JFE Mineral Company, Ltd.) was ground and pulverized using a bead mill (obtained from Thinky Corporation, NP-100), to disperse the nickel-based positive electrode active substance in anisole. Carbon black (1.8% by mass) and polymethyl methacrylate (PMMA, 1.8% by mass) (obtained from Sigma-Aldrich Co. LLC) were further mixed in the resultant, to obtain a liquid composition D. The liquid composition D had a mode diameter of 9.91 micrometers, and a viscosity of 24.2 mPa·s at 25 degrees C.

Using a liquid discharging apparatus (EV2500, obtained from Ricoh Company, Ltd.), the liquid composition D was discharged onto an aluminum foil fixed on a hot plate. The hot plate was heated to 120 degrees C, to dry the liquid composition D and obtain a positive electrode D. The liquid composition D was discharged stably, and no discharging failure occurred. The capacity of the positive electrode D per unit area was 0.88 mAh/cm².

### (Example 5)

In ethyl lactate (relative permittivity: 13.1) to which a dispersant (obtained from NOF Corporation, SC-0708A) (0.5% by mass) was added, lithium manganese oxide (LMO, 50% by mass) (obtained from Toshima Manufacturing Co., Ltd.) was ground and pulverized using a bead mill (obtained from Thinky Corporation, NP-100), to disperse lithium manganese oxide in ethyl lactate. Carbon black (1.5% by mass) and the polyamide imide compound (PAI) (1.5% by mass) represented by General formula 1 above were further mixed in the resultant, to obtain a liquid composition E. The liquid composition E had a mode diameter of 4.72 micrometers, and a viscosity of 11.4 mPa·s at 25 degrees C.

Using a liquid discharging apparatus (EV2500, obtained from Ricoh Company, Ltd.), the liquid composition E was discharged onto an aluminum foil fixed on a hot plate. The hot plate was heated to 120 degrees C, to dry the liquid composition E and obtain a positive electrode E. The liquid composition E was discharged stably, and no discharging failure occurred. The capacity of the positive electrode E per unit area was 0.61 mAh/cm².

### (Example 6)

In ethyl lactate (relative permittivity: 13.1) to which a dispersant (obtained from NOF Corporation, SC-0708A) (0.5% by mass) was added, lithium vanadium phosphate (LVP, 50% by mass) was ground and pulverized using a bead mill (obtained from Thinky Corporation, NP-100), to disperse lithium vanadium phosphate in ethyl lactate. Carbon black (1.5% by mass) and the polyamide imide compound (PAI) (1.5% by mass) represented by General formula 1 above were further mixed in the resultant, to obtain a liquid composition F. The liquid composition F had a mode diameter of 5.77 micrometers, and a viscosity of 13.2 mPa·s at 25 degrees C.

Using a liquid discharging apparatus (EV2500, obtained from Ricoh Company, Ltd.), the liquid composition F was discharged onto an aluminum foil fixed on a hot plate. The hot plate was heated to 120 degrees C, to dry the liquid composition F and obtain a positive electrode F. The liquid composition F was discharged stably, and no discharging failure occurred. The capacity of the positive electrode F per unit area was 0.72 mAh/cm².

### (Example 7)

In anisole (relative permittivity: 4.3) to which a dispersant (obtained from NOF Corporation, SC-0708A) (0.5% by mass) was added, a nickel-based positive electrode active substance (NCM, 50% by mass) (obtained from Sigma-Aldrich Co. LLC) was ground and pulverized using a bead mill (obtained from Thinky Corporation, NP-100), to disperse the nickel-based positive electrode active substance in anisole. Carbon black (1.5% by mass) and an acrylonitrile butadiene rubber (NBR) (1.5% by mass) (obtained from Sigma-Aldrich Co. LLC) were further mixed in the resultant, to obtain a liquid composition G. The liquid composition G had a mode diameter of 9.89 micrometers, and a viscosity of 15.7 mPa·s at 25 degrees C.

Using a liquid discharging apparatus (EV2500, obtained from Ricoh Company, Ltd.), the liquid composition G was discharged onto an aluminum foil fixed on a hot plate. The hot plate was heated to 120 degrees C, to dry the liquid composition G and obtain a positive electrode G. The liquid composition G was discharged stably, and no discharging failure occurred. The capacity of the positive electrode G per unit area was 0.91 mAh/cm².

### (Example 8)

In anisole (relative permittivity: 4.3) to which a dispersant (obtained from NOF Corporation, SC-0708A) (0.5% by mass) was added, a nickel-based positive electrode active substance (NCM, 50% by mass) (obtained from Sigma-Aldrich Co. LLC) was ground and pulverized using a bead mill (obtained from Thinky Corporation, NP-100), to disperse the nickel-based positive electrode active substance in anisole. Carbon black (1.5% by mass) and polymethyl methacrylate (PMMA) (1.5% by mass) (obtained from Sigma-Aldrich Co. LLC) were further mixed in the resultant, to obtain a liquid composition H. The liquid composition H had a mode diameter of 9.52 micrometers, and a viscosity of 14.1 mPa·s at 25 degrees C.

Using a liquid discharging apparatus (EV2500, obtained from Ricoh Company, Ltd.), the liquid composition H was discharged onto an aluminum foil fixed on a hot plate. The hot plate was heated to 120 degrees C, to dry the liquid composition H and obtain a positive electrode H. The liquid composition H was discharged stably, and no discharging failure occurred. The capacity of the positive electrode H per unit area was 0.87 mAh/cm².

### (Example 9)

In dibutyl ether (relative permittivity: 3.1) to which a dispersant (obtained from NOF Corporation, SC-0708A) (0.5% by mass) was added, a nickel-based positive electrode active substance (NCM, 50% by mass) (obtained from Sigma-Aldrich Co. LLC) was ground and pulverized using a bead mill (obtained from Thinky Corporation, NP-100), to disperse the nickel-based positive electrode active substance in dibutyl ether. Carbon black (1.5% by mass) and a styrene butadiene rubber (SBR) (1.5% by mass) (obtained from Sigma-Aldrich Co. LLC) were further mixed in the resultant, to obtain a liquid composition I. The liquid composition I had a mode diameter of 9.68 micrometers, and a viscosity of 9.12 mPa·s at 25 degrees C.

Using a liquid discharging apparatus (EV2500, obtained from Ricoh Company, Ltd.), the liquid composition I was discharged onto an aluminum foil fixed on a hot plate. The hot plate was heated to 120 degrees C, to dry the liquid composition I and obtain a positive electrode I. The liquid composition I was discharged stably, and no discharging failure occurred. The capacity of the positive electrode I per unit area was 0.88 mAh/cm².

### (Example 10)

In diethoxyethane to which a dispersant (obtained from NOF Corporation, SC-0708A) (0.5% by mass) was added, a nickel-based positive electrode active substance (NCM, 50% by mass) (obtained from Sigma-Aldrich Co. LLC) was ground and pulverized using a bead mill (obtained from Thinky Corporation, NP-100), to disperse the nickel-based positive electrode active substance in diethoxyethane (relative permittivity: 5.0). Carbon black (1.5% by mass) and polymethyl methacrylate (PMMA, 1.5% by mass) (obtained from Sigma-Aldrich Co. LLC) were further mixed in the resultant, to obtain a liquid composition J. The liquid composition J had a mode diameter of 9.77 micrometers, and a viscosity of 9.76 mPa·s at 25 degrees C.

Using a liquid discharging apparatus (EV2500, obtained from Ricoh Company, Ltd.), the liquid composition J was discharged onto an aluminum foil fixed on a hot plate. The hot plate was heated to 120 degrees C, to dry the liquid composition J and obtain a positive electrode J. The liquid composition J was discharged stably, and no discharging failure occurred. The capacity of the positive electrode J per unit area was 0.88 mAh/cm².

### (Example 11)

In ethyl lactate (relative permittivity: 13.1) to which a dispersant (obtained from NOF Corporation, SC-0708A) (0.5% by mass) was added, lithium titanate (LTO, 50% by mass) (obtained from Ishihara Sangyo Kaisha, Ltd.) was ground and pulverized using a bead mill (obtained from Thinky Corporation, NP-100), to disperse lithium titanate in ethyl lactate. Carbon black (1.5% by mass) and the polyamide imide compound (PAI) (1.5% by mass) represented by General formula 1 above were further mixed in the resultant, to obtain a liquid composition K. The liquid composition K had a mode diameter of 3.22 micrometers, and a viscosity of 11.3 mPa·s at 25 degrees C.

Using a liquid discharging apparatus (EV2500, obtained from Ricoh Company, Ltd.), the liquid composition K was discharged onto an aluminum foil fixed on a hot plate. The hot plate was heated to 120 degrees C, to dry the liquid composition K and obtain a negative electrode A. The liquid composition K was discharged stably, and no discharging failure occurred. The capacity of the negative electrode A per unit area was 0.81 mAh/cm².

### (Example 12)

In ethyl lactate (relative permittivity: 13.1) to which a dispersant (obtained from NOF Corporation, SC-0708A) (0.4% by mass) was added, graphite (40% by mass) (Gr, obtained from Sigma-Aldrich Co. LLC) was ground and pulverized using a bead mill (obtained from Thinky Corporation, NP-100), to disperse graphite in ethyl lactate. The polyamide imide compound (PAI) (2% by mass) represented by General formula 1 above was further mixed in the resultant, to obtain a liquid composition L. The liquid composition L had a mode diameter of 7.16 micrometers, and a viscosity of 17.1 mPa·s at 25 degrees C.

Using a liquid discharging apparatus (EV2500, obtained from Ricoh Company, Ltd.), the liquid composition L was discharged onto an aluminum foil fixed on a hot plate. The hot plate was heated to 120 degrees C, to dry the liquid composition L and obtain a negative electrode B. The liquid composition L was discharged stably, and no discharging failure occurred. The capacity of the negative electrode B per unit area was 1.79 mAh/cm².

### (Example 13)

In anisole (relative permittivity: 4.3) to which a dispersant (obtained from NOF Corporation, SC-0708A) (0.4% by mass) was added, graphite (40% by mass) (Gr, obtained from Sigma-Aldrich Co. LLC) was ground and pulverized using a bead mill (obtained from Thinky Corporation, NP-100), to disperse graphite in anisole. Polymethyl methacrylate (PMMA, 2% by mass) (obtained from Sigma-Aldrich Co. LLC) was further mixed in the resultant, to obtain a liquid composition M. The liquid composition M had a mode diameter of 7.11 micrometers, and a viscosity of 34.6 mPa·s at 25 degrees C.

Using a liquid discharging apparatus (EV2500, obtained from Ricoh Company, Ltd.), the liquid composition M was discharged onto an aluminum foil fixed on a hot plate. The hot plate was heated to 120 degrees C, to dry the liquid composition M and obtain a negative electrode C. The liquid composition M was discharged stably, and no discharging failure occurred. The capacity of the negative electrode C per unit area was 1.81 mAh/cm².

### (Example 14)

In anisole (relative permittivity: 4.3) to which a dispersant (obtained from NOF Corporation, SC-0708A) (0.45% by mass) was added, graphite (45% by mass) (Gr, obtained from Sigma-Aldrich Co. LLC) was ground and pulverized using a bead mill (obtained from Thinky Corporation, NP-100), to disperse graphite in anisole. Polymethyl methacrylate (PMMA, 2.25% by mass) (obtained from Sigma-Aldrich Co. LLC) was further mixed in the resultant, to obtain a liquid composition N. The liquid composition N had a mode diameter of 7.81 micrometers, and a viscosity of 54.6 mPa·s at 25 degrees C.

Using a liquid discharging apparatus (EV2500, obtained from Ricoh Company, Ltd.), the liquid composition N was discharged onto an aluminum foil fixed on a hot plate. The hot plate was heated to 120 degrees C, to dry the liquid composition N and obtain a negative electrode D. The liquid composition N was discharged stably, and no discharging failure occurred. The capacity of the negative electrode D per unit area was 1.83 mAh/cm².

### (Example 15)

In a mixture solution (relative permittivity: 3.7) in which anisole and dibutyl ether were mixed at a volume ratio of 1:1 and to which a dispersant (obtained from NOF Corporation, SC-0708A) (0.5% by mass) was added, a nickel-based positive electrode active substance (NCM, 50% by mass) (obtained from Sigma-Aldrich Co. LLC) was ground and pulverized using a bead mill (obtained from Thinky Corporation, NP-100), to disperse the nickel-based positive electrode active substance in the mixture solution of anisole and dibutyl ether at a volume ratio of 1:1. Carbon black (1.5% by mass) and a styrene butadiene rubber (SBR) (1.5% by mass) (obtained from Sigma-Aldrich Co. LLC) were further mixed in the resultant, to obtain a liquid composition O. The liquid composition O had a mode diameter of 9.34 micrometers, and a viscosity of 11.2 mPa·s at 25 degrees C.

Using a liquid discharging apparatus (EV2500, obtained from Ricoh Company, Ltd.), the liquid composition O was discharged onto an aluminum foil fixed on a hot plate. The hot plate was heated to 120 degrees C, to dry the liquid composition O and obtain a positive electrode K. The liquid composition O was discharged stably, and no discharging failure occurred. The capacity of the positive electrode K per unit area was 0.87 mAh/cm².

### (Example 16)

In anisole (relative permittivity: 4.3) to which a dispersant (obtained from NOF Corporation, SC-0708A) (0.5% by mass) was added, a nickel-based positive electrode active substance (NCM, 40% by mass) (obtained from Sigma-Aldrich Co. LLC) was ground and pulverized using a bead mill (obtained from Thinky Corporation, NP-100), to disperse the nickel-based positive electrode active substance in anisole. Carbon black (1.5% by mass), an acrylonitrile butadiene rubber (NBR) (1.5% by mass), and the solid electrolyte 1 (15% by mass) were further mixed in the resultant, to obtain a liquid composition P. The liquid composition P had a mode diameter of 6.21 micrometers, and a viscosity of 10.5 mPa·s at 25 degrees C.

Using a liquid discharging apparatus, the liquid composition P was discharged onto an aluminum foil fixed on a hot plate. The hot plate was heated to 120 degrees C, to dry the liquid composition P and obtain a positive electrode L. The liquid composition P was discharged stably, and no discharging failure occurred. The capacity of the positive electrode L per unit area was 0.89 mAh/cm².

### (Example 17)

In anisole (relative permittivity: 4.3) to which a dispersant (obtained from NOF Corporation, SC-0708A) (0.5% by mass) was added, graphite (40% by mass) (Gr, obtained from Sigma-Aldrich Co. LLC) was ground and pulverized using a bead mill (obtained from Thinky Corporation, NP-100), to disperse graphite in anisole. Carbon black (1.5% by mass), an acrylonitrile butadiene rubber (NBR) (1.5% by mass) (obtained from Sigma-Aldrich Co. LLC), and the solid electrolyte 1 (15% by mass) were further mixed in the resultant, to obtain a liquid composition Q. The liquid composition Q had a mode diameter of 7.79 micrometers, and a viscosity of 38.1 mPa·s at 25 degrees C.

Using a liquid discharging apparatus, the liquid composition Q was discharged onto a stainless steel foil (obtained from Nilaco Corporation) fixed on a hot plate. The hot plate was heated to 120 degrees C, to dry the liquid composition Q and obtain a negative electrode E. The liquid composition Q was discharged stably, and no discharging failure occurred. The capacity of the negative electrode E per unit area was 1.78 mAh/cm².

### (Comparative Example 1)

In N-methyl pyrrolidone (NMP, relative permittivity: 32.0) to which a dispersant (obtained from NOF Corporation, SC-0708A) (0.5% by mass) was added, a nickel-based positive electrode active substance (NCA, 50% by mass) (obtained from JFE Mineral Company, Ltd.) was ground and pulverized using a bead mill (obtained from Thinky Corporation, NP-100), to disperse the nickel-based positive electrode active substance in N-methyl pyrrolidone. Carbon black (1.5% by mass) and the polyamide imide compound (PAI) (1.5% by mass) represented by General formula 1 above were further mixed in the resultant, to obtain a liquid composition R. The liquid composition R had a mode diameter of 9.41 micrometers, and a viscosity of 200.6 mPa·s at 25 degrees C. Because the liquid composition R had a high viscosity, it was impossible to discharge the liquid composition R from a liquid discharging apparatus (EV2500, obtained from Ricoh Company, Ltd.).

For measuring capacity, a film of the liquid composition R was formed on an aluminum foil by a bar coating method in a manner that the weight per unit area would be the same as the positive electrode A. Then, a hot plate was heated to 120 degrees C to dry the liquid composition R and produce a positive electrode M. The capacity of the positive electrode M per unit area was 0.79 mAh/cm², which was only about 90% of Example 1.

### (Comparative Example 2)

In dimethyl acetamide (DMA, relative permittivity: 38.0) to which a dispersant (obtained from NOF Corporation, SC-0708A) (0.5% by mass) was added, a nickel-based positive electrode active substance (NCA, 50% by mass) (obtained from JFE Mineral Company, Ltd.) was ground and pulverized using a bead mill (obtained from Thinky Corporation, NP-100), to disperse the nickel-based positive electrode active substance in dimethyl acetamide. Carbon black (1.5% by mass) and the polyamide imide compound (PAI) (1.5% by mass) represented by General formula 1 above were further mixed in the resultant, to obtain a liquid composition S. The liquid composition S had a mode diameter of 9.45 micrometers, and a viscosity of 245.3 mPa·s at 25 degrees C. Because the liquid composition S had a high viscosity, it was impossible to discharge the liquid composition S from a liquid discharging apparatus (EV2500, obtained from Ricoh Company, Ltd.).

For measuring capacity, a film of the liquid composition S was formed on an aluminum foil by a bar coating method in a manner that the weight per unit area would be the same as the positive electrode A. Then, a hot plate was heated to 120 degrees C to dry the liquid composition S and produce a positive electrode N. The capacity of the positive electrode N per unit area was 0.77 mAh/cm², which was only about 90% of Example 1.

### (Comparative Example 3)

In dimethyl formamide (DMF, relative permittivity: 36.7) to which a dispersant (obtained from NOF Corporation, SC-0708A) (0.5% by mass) was added, a nickel-based positive electrode active substance (NCA, 50% by mass) (obtained from JFE Mineral Company, Ltd.) was ground and pulverized using a bead mill (obtained from Thinky Corporation, NP-100), to disperse the nickel-based positive electrode active substance in dimethyl formamide. Carbon black (1.5% by mass) and the polyamide imide compound (PAI) (1.5% by mass) represented by General formula 1 above were further mixed in the resultant, to obtain a liquid composition T. The liquid composition T had a mode diameter of 9.49 micrometers, and a viscosity of 247.5 mPa·s at 25 degrees C. Because the liquid composition T had a high viscosity, it was impossible to discharge the liquid composition T from a liquid discharging apparatus (EV2500, obtained from Ricoh Company, Ltd.).

For measuring capacity, a film of the liquid composition T was formed on an aluminum foil by a bar coating method in a manner that the weight per unit area would be the same as the positive electrode A. Then, a hot plate was heated to 120 degrees C to dry the liquid composition T and produce a positive electrode O. The capacity of the positive electrode O per unit area was 0.74 mAh/cm², which was only about 90% of Example 1.

### (Comparative Example 4)

In N-methyl pyrrolidone (NMP, relative permittivity: 32.0) to which a dispersant (obtained from NOF Corporation, SC-0708A) (0.5% by mass) was added, lithium manganese oxide (LMO, 50% by mass) (obtained from Toshima Manufacturing Co., Ltd.) was ground and pulverized using a bead mill (obtained from Thinky Corporation, NP-100), to disperse lithium manganese oxide in N-methyl pyrrolidone. Carbon black (1.5% by mass) and the polyamide imide compound (PAI) (1.5% by mass) represented by General formula 1 above were further mixed in the resultant, to obtain a liquid composition U. The liquid composition U had a mode diameter of 5.75 micrometers, and a viscosity of 212.8 mPa·s at 25 degrees C. Because the liquid composition U had a high viscosity, it was impossible to discharge the liquid composition U from a liquid discharging apparatus (EV2500, obtained from Ricoh Company, Ltd.).

For measuring capacity, a film of the liquid composition U was formed on an aluminum foil by a bar coating method in a manner that the weight per unit area would be the same as the positive electrode A. Then, a hot plate was heated to 120 degrees C to dry the liquid composition U and produce a positive electrode P. The capacity of the positive electrode P per unit area was 0.52 mAh/cm², which was only about 90% of Example 5.

The measurement results of the mode diameter (micrometer) of the active substance, the viscosity (mPa·s) of the liquid composition at 25 degrees C, and the capacity (mAh/cm²) of the electrode per unit area of Examples 1 to 17 and Comparative Examples 1 to 4 are presented in Table 1 and Table 2.

### <Dispersion stability>

Each liquid composition obtained was left to stand still for 24 hours, subsequently stirred, and subjected to dispersion treatment for 1 minute using an ultrasonic homogenizer (US-300T, obtained from Nissei Corporation). The particle size distribution of the resultant was measured using a particle size distribution measuring instrument (MASTER SIZER 2000, obtained from Malvern Panalytical Ltd.). The result is presented in Table 2.

In Table 2, the rating is "A" when even after subjected to dispersion treatment using the ultrasonic homogenizer, the liquid composition had almost the same mode diameter as immediately after the liquid composition was obtained, i.e., before the liquid composition was subjected to dispersion treatment using the ultrasonic homogenizer, whereas the rating is "B" when the liquid composition did not have almost the same mode diameter. Here, when the liquid composition had almost the same mode diameter, the mode diameter difference is 10% or lower. When the liquid composition did not have almost the same mode diameter, the mode diameter difference is greater than 10%.

**Table 1**

| | Liquid composition | Electrode | Active substance | | Binder | Dispersion medium | |
|---|---|---|---|---|---|---|---|
| | | | Kind | Content (% by mass) | | Kind | Relative permittivity |
| Ex. 1 | A | Positive electrode A | NCA | 50 | PAI | Ethyl lactate | 13.1 |
| Ex. 2 | B | Positive electrode B | NCA | 60 | PAI | Ethyl lactate | 13.1 |
| Ex. 3 | C | Positive electrode C | NCA | 50 | PMMA | Anisole | 4.3 |
| Ex. 4 | D | Positive electrode D | NCA | 60 | PMMA | Anisole | 4.3 |
| Ex. 5 | E | Positive electrode E | LMO | 50 | PAI | Ethyl lactate | 13.1 |
| Ex. 6 | F | Positive electrode F | LVP | 50 | PAI | Ethyl lactate | 13.1 |
| Ex. 7 | G | Positive electrode G | NCM | 50 | NBR | Anisole | 4.3 |
| Ex. 8 | H | Positive electrode H | NCM | 50 | PMMA | Anisole | 4.3 |
| Ex. 9 | I | Positive electrode I | NCM | 50 | SBR | Dibutyl ether | 3.1 |
| Ex. 10 | J | Positive electrode J | NCM | 50 | PMMA | Diethoxyethane | 5.0 |
| Ex. 11 | K | Negative electrode A | LTO | 40 | PAI | Ethyl lactate | 13.1 |
| Ex. 12 | L | Negative electrode B | Gr | 40 | PAI | Ethyl lactate | 13.1 |
| Ex. 13 | M | Negative electrode C | Gr | 40 | PMMA | Anisole | 4.3 |
| Ex. 14 | N | Negative electrode D | Gr | 45 | PMMA | Anisole | 4.3 |
| Ex. 15 | O | Positive electrode K | NCM | 50 | SBR | Anisole/ dibutyl ether | 3.7 |
| Ex. 16 | P | Positive electrode L | NCM | 40 | NBR | Anisole | 4.3 |
| Ex. 17 | Q | Negative electrode E | Gr | 40 | NBR | Anisole | 4.3 |
| Comp. Ex. 1 | R | Positive electrode M | NCA | 50 | PAI | NMP | 32.0 |
| Comp. Ex. 2 | s | Positive electrode N | NCA | 50 | PAI | DMA | 38.0 |
| Comp. Ex. 3 | T | Positive electrode O | NCA | 50 | PAI | DMF | 36.7 |
| Comp. Ex. 4 | U | Positive electrode P | LMO | 50 | PAI | NMP | 32.0 |

| | | | | | | | |
|---|---|---|---|---|---|---|---|
| *The relative permittivity values of the dispersion media in Table 1 are values at 25 degrees C. | | | | | | | |

**Table 2**

| | Mode diameter (micrometer) | Viscosity (mPa·s) | Capacity per unit area (mAh/cm²) | Dispersion stability |
|---|---|---|---|---|
| Ex. 1 | 9.72 | 10.7 | 0.88 | A |
| Ex. 2 | 9.89 | 20.1 | 0.87 | A |
| Ex. 3 | 9.66 | 11.5 | 0.89 | A |
| Ex. 4 | 9.91 | 24.2 | 0.88 | A |
| Ex. 5 | 4.72 | 11.4 | 0.61 | A |
| Ex. 6 | 5.77 | 13.2 | 0.72 | A |
| Ex. 7 | 9.89 | 15.7 | 0.91 | A |
| Ex. 8 | 9.52 | 14.1 | 0.87 | A |
| Ex. 9 | 9.68 | 9.12 | 0.88 | A |
| Ex. 10 | 9.77 | 9.76 | 0.88 | A |
| Ex. 11 | 3.22 | 11.3 | 0.81 | A |
| Ex. 12 | 7.16 | 17.1 | 1.79 | A |
| Ex. 13 | 7.11 | 34.6 | 1.81 | A |
| Ex. 14 | 7.81 | 54.6 | 1.83 | A |
| Ex. 15 | 9.34 | 11.2 | 0.87 | A |
| Ex. 16 | 6.21 | 10.5 | 0.89 | A |
| Ex. 17 | 7.79 | 38.1 | 1.78 | A |
| Comp. Ex. 1 | 9.41 | 200.6 | 0.79 | B |
| Comp. Ex. 2 | 9.45 | 245.3 | 0.77 | B |
| Comp. Ex. 3 | 9.49 | 247.5 | 0.74 | B |
| Comp. Ex. 4 | 5.75 | 212.8 | 0.52 | B |

From the results of Table 1 and Table 2, the liquid compositions of Examples 1 to 17 had a viscosity of 200 mPa·s or lower and had a good dispersion stability. It turned out that the viscosity of the liquid compositions of Examples 1 to 17 was lower than the viscosity of the liquid compositions of Comparative Examples 1 to 4. Moreover, there was a tendency that the capacity of the electrodes of Examples 1 to 17 per unit area was higher than the capacity of the electrodes of Comparative Examples 1 to 4 per unit area.

The cycle characteristic of the coin batteries produced in Example 5 and Comparative Example 4 was evaluated.

### [Cycle characteristic]

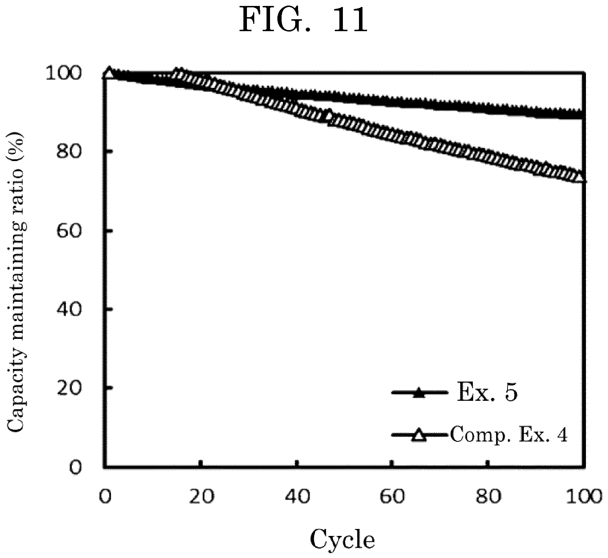

The cycle characteristic of the coin batteries produced in Example 5 and Comparative Example 4 was evaluated using a charge/discharge meter (TOSCAT3001, obtained from Toyosystem Corporation). The results are plotted in FIG. 11. Based on the initial capacity of each coin battery, each coin battery was charged and discharged repeatedly a hundred cycles. The capacity maintaining ratio of the battery of Example 5 after the hundred cycles was 89.6%. The capacity maintaining ratio of the battery of Comparative Example 4 after the hundred cycles was 74.7%. Although the active substance contained in the liquid composition E of Example 5 and the active substance contained in the liquid composition U of Comparative Example 4 were ground and pulverized to almost the same mode diameter, the capacity maintaining ratio of Comparative Example 4 was lower. This was considered due to that the active substance had eluted in the form of ions into the dispersion medium during grinding.

For verification, the amounts of lithium ions and cobalt ions that had eluted from the liquid composition E and the liquid composition U were analyzed using an ICP optical emission spectrometer AGILENT 5110 VDV TYPE (obtained from Agilent Technologies, Inc.). The amounts of lithium ions and cobalt ions that had eluted from the liquid composition E were both 10 micrograms/g or less, whereas the amounts of lithium ions and cobalt ions that had eluted from the liquid composition U were calculated to be in the range of from 10 micrograms/g through 100 micrograms/g. Also from this result, it was inferred that the active substance had eluted in the form of ions from the liquid composition U into the dispersion medium.

Next, Examples 18 and 19 and Comparative Examples 5 and 6 were carried out in order to evaluate the viscosity and dispersibility of liquid compositions free of a binder or a binder precursor.

### (Example 18)

In anisole (relative permittivity: 4.3) to which a dispersant (obtained from NOF Corporation, SC-0708A) (0.5% by mass) was added, a nickel-based positive electrode active substance (NCA, 50% by mass) (obtained from JFE Mineral Company, Ltd.) was ground and pulverized using a bead mill (obtained from Thinky Corporation, NP-100), to disperse the nickel-based positive electrode active substance in anisole, to obtain a liquid composition V. The liquid composition V had a mode diameter of 9.61 micrometers, and a viscosity of 4.11 mPa·s at 25 degrees C.

Using a liquid discharging apparatus (EV2500, obtained from Ricoh Company, Ltd.), the liquid composition V was discharged onto an aluminum foil fixed on a hot plate. The hot plate was heated to 120 degrees C, to dry the liquid composition V and obtain a positive electrode Q. The liquid composition V was discharged stably, and no discharging failure occurred.

### (Example 19)

In dibutyl ether (relative permittivity: 3.1) to which a dispersant (obtained from NOF Corporation, SC-0708A) (0.5% by mass) was added, a nickel-based positive electrode active substance (NCA, 50% by mass) (obtained from JFE Mineral Company, Ltd.) was ground and pulverized using a bead mill (obtained from Thinky Corporation, NP-100), to disperse the nickel-based positive electrode active substance in dibutyl ether, to obtain a liquid composition W. The liquid composition W had a mode diameter of 9.75 micrometers, and a viscosity of 4.64 mPa·s at 25 degrees C.

Using a liquid discharging apparatus (EV2500, obtained from Ricoh Company, Ltd.), the liquid composition W was discharged onto an aluminum foil fixed on a hot plate. The hot plate was heated to 120 degrees C, to dry the liquid composition W and obtain a positive electrode R. The liquid composition W was discharged stably, and no discharging failure occurred.

### (Comparative Example 5)

In N-methyl pyrrolidone (NMP, relative permittivity: 32.0) to which a dispersant (obtained from NOF Corporation, SC-0708A) (0.5% by mass) was added, a nickel-based positive electrode active substance (NCA, 50% by mass) (obtained from JFE Mineral Company, Ltd.) was ground and pulverized using a bead mill (obtained from Thinky Corporation, NP-100), to disperse the nickel-based positive electrode active substance in N-methyl pyrrolidone (NMP), to obtain a liquid composition X. The liquid composition X had a mode diameter of 9.54 micrometers, and a viscosity of 19.9 mPa·s at 25 degrees C.

A film of the liquid composition X was formed on an aluminum foil by a bar coating method in a manner that the weight per unit area would be the same as the positive electrode A. Then, a hot plate was heated to 120 degrees C to dry the liquid composition X and produce a positive electrode S. The active substance of the positive electrode S was not sufficiently firmly fastened to the aluminum foil, and fell off when scratched with a finger.

### (Comparative Example 6)

In dimethyl acetamide (DMA, relative permittivity: 38.0) to which a dispersant (obtained from NOF Corporation, SC-0708A) (0.5% by mass) was added, lithium manganese oxide (LMO, 50% by mass) (obtained from Toshima Manufacturing Co., Ltd.) was ground and pulverized using a bead mill (obtained from Thinky Corporation, NP-100), to disperse lithium manganese oxide in dimethyl acetamide (DMA), to obtain a liquid composition Y. The liquid composition Y had a mode diameter of 9.63 micrometers, and a viscosity of 21.1 mPa·s at 25 degrees C.

A film of the liquid composition Y was formed on an aluminum foil by a bar coating method in a manner that the weight per unit area would be the same as the positive electrode A. Then, a hot plate was heated to 120 degrees C to dry the liquid composition Y and produce a positive electrode T. The active substance was not sufficiently firmly fastened to the aluminum foil, and fell off when scratched with a finger.

The measurement results of the mode diameter (micrometer) of the active substance, the viscosity (mPa·s) of the liquid composition at 25 degrees C, and dispersion stability of Examples 18 and 19 and Comparative Examples 5 and 6 are presented in Table 3 and Table 4.

**Table 3**

| | Liquid composition | Electrode | Active substance | | Binder | Dispersion medium | |
|---|---|---|---|---|---|---|---|
| | | | Kind | Content (% by mass) | | Kind | Relative permittivity |
| Ex. 18 | V | Positive electrode Q | NCA | 50 | - | Anisole | 4.3 |
| Ex. 19 | W | Positive electrode R | NCA | 50 | - | Dibutyl ether | 3.1 |
| Comp. Ex. 5 | X | Positive electrode S | NCA | 50 | - | NMP | 32.0 |
| Comp. Ex. 6 | Y | Positive electrode T | LMO | 50 | - | DMA | 38.0 |

| | | | | | | | |
|---|---|---|---|---|---|---|---|
| *The relative permittivity values of the dispersion media in Table 3 are values at 25 degrees C. | | | | | | | |

**Table 4**

| | Mode diameter (micrometer) | Viscosity (mPa·s) | Dispersion stability |
|---|---|---|---|
| Ex. 18 | 9.61 | 4.11 | A |
| Ex. 19 | 9.75 | 4.64 | A |
| Comp. Ex. 5 | 9.54 | 19.9 | B |
| Comp. Ex. 6 | 9.63 | 21.1 | B |

## Claims

1. A liquid composition, comprising:
an active substance; and
a dispersion medium having a relative permittivity of 30 or lower 25 degrees C.

2. The liquid composition according to claim 1,
wherein a content of the active substance relative to the liquid composition is 40% by mass or greater.

3. The liquid composition according to claim 1 or 2,
wherein a maximum particle diameter of the active substance is 32 micrometers or less.

4. The liquid composition according to any one of claims 1 to 3,
wherein a mode diameter of the active substance is 0.5 micrometers or greater but 10 micrometers or less.

5. The liquid composition according to any one of claims 1 to 4,
wherein the relative permittivity of the dispersion medium 25 degrees C is 15 or lower.

6. The liquid composition according to according to any one of claims 1 to 4,
wherein a viscosity of the liquid composition at 25 degrees C is 200 mPa·S or lower.

7. The liquid composition according to any one of claims 1 to 6, further comprising
a solid electrolyte.

8. A liquid composition for inkjet discharging, the liquid composition comprising
the liquid composition according to any one of claims 1 to 7.

9. A storing container, comprising
the liquid composition according to any one of claims 1 to 7,
wherein the liquid composition is stored in the storing container.

10. An electrode producing apparatus, comprising:
the storing container according to claim 9; and
an applying unit configured to apply the liquid composition stored in the storing container onto an electrode base material.

11. The electrode producing apparatus according to claim 10,
wherein the applying unit is an inkjet head, and
a ratio of a maximum particle diameter of the active substance to a nozzle diameter of the inkjet head is 0.8 or less.

12. An electrochemical element producing apparatus, comprising
an electrode producing unit configured to produce an electrode using the electrode producing apparatus according to claim 10 or 11.

13. A method for producing an electrode, the method comprising
applying the liquid composition according to any one of claims 1 to 7.

14. The method for producing an electrode according to claim 13,
wherein in the applying, the liquid composition is discharged by an inkjet method.

15. A method for producing an electrochemical element, the method comprising
producing an electrode by the method for producing an electrode according to claim 13 or 14.
